# EUROPÄISCHE PATENTANMELDUNG

(11) **EP 1 923 293 A1**
(43) Veröffentlichungstag der Anmeldung: **21.05.2008**
(21) Anmeldenummer: 07003308.9
(22) Anmeldetag: 16.02.2007
(51) Int. Cl.: B62B 7/14, B62B 9/12, B62B 9/14

(54) **Verdeck sowie dieses umfassender Kinderwagen**

(30) Priorität: 17.11.2006 DE 202006017674 U
(71) Anmelder: ILinko Ltd, Quarry Bay, Hong Kong (CN)
(72) Erfinder: Lake, Jon, Sunnyvale, CA 94087 (US); Augustijn, Diederik, 2724 Zoetermeer (NL)
(74) Vertreter: Metten, Karl-Heinz

(57) **Zusammenfassung**

Die vorliegende Erfindung betrifft ein Verdeck (95), insbesondere für einen Personentransportwagen zur zumindest teilweisen Überspannung zumindest einer Öffnung zumindest einer Personenaufnahmevorrichtung, umfassend zumindest zwei relativ zueinander und zumindest partiell in- bzw. übereinander um zumindest eine gemeinsame Drehachse (99) bewegbare erste (96) und zweite (97) Verdeckelemente, umfassend einen vorderen Verdeckbügel (98a₁), und einen beabstandeten hinteren Verdeckbügel (98a₂), die beide mit der Drehachse verbunden sind, mit einer Hauptverdeckfläche (96a), aufgespannt zwischen der vorderen und der hinteren Randbegrenzung, und gegebenenfalls sich gegenüberliegenden ersten und zweiten Seitenverdeckflächen, die sich von der Hauptverdeckfläche jeweils in Richtung, insbesondere bis zu, der Drehachse erstrecken, wobei die zwischen der vorderen und der hinteren Randbegrenzung des ersten Verdeckelements aufgespannte bzw. vorliegende Hauptverdeckfläche, zumindest bereichsweise einen geringeren radialen Abstand (r₁a) zur Drehachse aufweist als die maximale radiale Entfernung (r₂) der vorderen Randbegrenzung des zweiten Verdeckelements, so daß das zweite Verdeckelement durch die hintere Randbegrenzung des ersten Verdeckelements einschiebbar ist.
Die Erfindung betrifft auch einen Personentransportwagen, insbesondere Kinderwagen, umfassend zumindest ein erfindungsgemäßes Verdeck, wobei das Verdeck reversibel lösbar mit dem Personentransportwagen verbunden ist.

## Beschreibung

Die vorliegende Erfindung betrifft ein aufklappbares und ineinander verschiebbares Verdeck, insbesondere für einen Personentransportwagen zur zumindest teilweisen Überspannung zumindest einer Öffnung zumindest einer Personenaufnahmevorrichtung, wobei das Verdeck zumindest zwei relativ zueinander um zumindest eine gemeinsame Drehachse bewegbare Verdeckelemente umfaßt.

Aus dem Stand der Technik ist eine Vielzahl von Personentransportwagen, insbesondere in Form von Kinderwagen, bekannt.

So offenbart beispielsweise die US 6,446,900 B1 ein Transportfahrzeug für ein Kind geringen Alters. Das Transportfahrzeug umfaßt einen Rahmen, an dem eine Kindertragewanne lösbar befestigt werden kann. Zur Verriegelung der Wanne an dem Rahmen weist die Wanne eine Stange auf, an die ein an dem Rahmen angeordneter Verriegelungsmechanismus angreifen kann. Dazu ist der Verriegelungsmechanismus drehbar gelagert und weist Ausnehmungen zur Aufnahme der Stange in einer Verriegelungsposition der Verriegelungseinrichtung auf.

Des weiteren offenbart die US 6,286,844 B1 einen Kinderwagen mit entfernbarem Sitz. Dieser Kinderwagen enthält einen Rahmen sowie einen Kinderwagensitz, der an den Rahmen gekoppelt werden kann. Um eine Verriegelung des Sitzes an dem Rahmen zu erreichen, weist der Sitz einem Halterungszapfen auf, der Eingriff in einen Haken einer Verriegelungsvorrichtung, die mit dem Rahmen in Wirkverbindung steht, finden kann. Um einen Eingriff des Hakens in den Zapfen lösen zu können, weist der Sitz einen Freigabeknopf auf, welcher bei einer Befestigung des Sitzes an dem Rahmen mit dem Haken in Wirkverbindung steht. Zur Entriegelung des Sitzes von dem Rahmen wird der Auslöseknopf heruntergedrückt, wodurch der Eingriff des Hakens in den Zapfen gelöst wird.

Die DE 299 23 625 U1 offenbart einen Buggy umfassend einen Rahmen und einen an diesem befestigbaren Sitz. Über eine Steckerbuchsenverbindung kann der Sitz sowohl in eine Fahrtrichtung des Buggys als auch in die entgegengesetzte Richtung an dem Rahmen angebracht werden sowie über ein Gelenk ein Neigungswinkel des ansonsten statischen Sitzes relativ zu dem Rahmen eingestellt werden.

Der Nachteil der aus dem Stand der Technik bekannten Verriegelungsvorrichtungen ist jedoch, daß deren Bedienung je nach Betriebsposition des Kinderwagens beeinträchtigt ist. Insbesondere bei Kinderwagen, bei denen eine Kinderaufnahmevorrichtung sowohl mit als auch gegen die Fahrtrichtung angeordnet werden kann, ist es möglich, daß eine Bedienungseinrichtung für eine Vemegelungsvorrichtung durch andere Anbauten des Kinderwagens, wie Elemente des Rahmens, verdeckt ist und so nur schwer durch einen Benutzer zu bedienen ist.

Darüber hinaus sind aus dem Stand der Technik Kinderwagen bekannt, bei denen eine Kinderaufnahmevorrichtung von einer Sitzkonfiguration in eine Wannen- oder Korbkonfiguration überführt werden kann.

So ist der US 4,836,573 eine Kombination eines Kinderwagens und einer Babywiege zu entnehmen. Diese Kombination umfaßt einen Rahmen des Kinderwagens sowie eine Kinderaufnahmevorrichtung, die schwenkbar an dem Rahmen befestigt ist. Um die Kinderaufnahmevorrichtung von einer Korbkonfiguration, in der die Kinderaufnahmevorrichtung im wesentlichen kubusförmig ausgebildet ist, in eine Sitzkonfiguration zu überführen, wird diese zunächst derartig verschwenkt, daß eine Seitenwand der Kinderaufnahmevorrichtung eine Sitzfläche bildet, während eine Bodenfläche der Kinderaufnahmevorrichtung die Funktion einer Rücklehne übernimmt. Die weiteren drei Seitenwände der Kinderaufnahmevorrichtung sind als flexible Seitenwände ausgebildet, so daß die Kinderaufnahmevorrichtung von der Kubusform in eine Keilform überführt werden kann. Nachteilig bei dieser Kombination ist jedoch, daß die Sitzkonfiguration wenig komfortabel für ein Kind ist, da eine Einstellung der verschiedenen Sitzkomponenten zueinander nicht möglich ist.

Die US 5,833,261 offenbart eine Fußstütze für einen Kinderwagen, welche zwischen zwei Positionen bewegbar ist. Der Kinderwagen weist einen Rahmen auf, an welchem Elemente befestigt sind, die es erlauben, daß der Rahmen eine Kinderaufnahmevorrichtung einerseits in Form eines Sitzes und andererseits in Form eines Korbes oder einer Wanne aufnehmen kann. Dazu kann einerseits ein eine Rücklehne festlegendes Element des Rahmens derartig verschwenkt werden, daß ein Winkel zwischen diesem Element und einem eine Sitzfläche festlegenden Element verändert werden kann. Nachteil bei diesem Kinderwagen ist jedoch, daß der Rahmen nicht an unterschiedliche Sitzkonfigurationen angepaßt werden kann, insbesondere ein Neigungswinkel einer Sitzfläche eines Sitzes nicht veränderbar ist.

Ferner sind aus dem Stand der Technik Verdecke für Kinderwagen, insbesondere zum Schutz vor Sonneneinstrahlung und Regen, bekannt.

So offenbart die DE 20 2005 010 099 U1 einen Kinderwagen, welcher ein gattungsgemäßes Verdeck aufweist. Das Verdeck weist zwei Verdeckbügel auf, an denen und zwischen denen ein doppellagiger Verdeckstoff angeordnet ist. Zum Aufspannen des Verdecks wird der Winkel zwischen den Verdeckbügeln vergrößert, so daß der Stoff aufgespannt wird, während zum Einklappen des Verdecks der Winkel zwischen Verdeckbügel unter Faltung des Verdeckstoffes verringert wird. Nachteilig bei diesem Verdeck ist jedoch, daß der Verdeckstoff Schaden nehmen kann, wenn das Verdeck in feuchtem Zustand zusammengeklappt wird. So kann es aufgrund einer unzureichenden Belüftung dazu kommen, daß sich auf dem Verdeckstoff Schimmel oder ähnliches bildet.

Ferner offenbart die US 2004/0119266 A1 einen Kindersportwagen. Dieser Kindersportwagen weist einen Rahmen auf, an welchem ein Kindertragkörper befestigt werden kann. Der Kindertragkörper weist ein Verdeck auf. Dieses Verdeck ist in Form einer Halbkugel aus einem im wesentlichen unflexiblen Material ausgebildet. Das Verdeck ist derartig drehbar an der Kinderaufnahmevorrichtung befestigt, daß es in einer ersten Konfiguration die Kinderaufnahanevorrichtung im wesentlichen bedeckt und in einer zweiten Konfiguration im wesentlichen unterhalb der Känderauhahtnevorüchtung angeordnet wird. Nachteilig bei diesem Verdeck ist jedoch, daß das Verdeck in seiner Größe nicht veränderbar ist, was den Kinderwagen, insbesondere bei einem Transport, unhandlich macht.

Daher ist es die Aufgabe der vorliegende Erfindung ein Verdeck, insbesondere ein für einen Personentransportwagen, bereitzustellen, das die Nachteile des Stands der Technik überwindet, insbesondere eine Beschädigung des Verdeckmaterials auch in einem zusammengefalteten Zustand des Verdecks verhindert und gleichzeitig eine größtmögliche Kompaktheit des Verdecks im zusammengefalteten Zustand ermöglicht. Ferner soll ein Personentransportwagen, insbesondere in Form eines Kinderwagens, bereitgestellt werden, der die Nachteile des Stands der Technik überwindet.

Diese Aufgabe wird erfindungsgemäß durch ein Verdeck, insbesondere für einen Personentransportwagen, beispielsweise Kinderwagen oder Buggy, gelöst, umfassend zumindest zwei relativ zueinander und zumindest partiell in- bzw. übereinander um zumindest eine gemeinsame Drehachse bewegbare erste und zweite Verdeckelemente, umfassend jeweils eine vordere Randbegrenzung, insbesondere vorderen Verdeckbügel, und eine beabstandete hintere Randbegrenzung, insbesondere hinteren Verdeckbügel, die beide mit der Drehachse verbunden oder verbindbar sind, mit einer Hauptverdeckfläche, aufgespannt zwischen der vorderen und der hinteren Randbegrenzung, und gegebenenfalls sich gegenüberliegenden ersten und zweiten Seitenverdeckflächen, die sich von der Hauptverdeckfläche jeweils in Richtung, insbesondere bis zu, der Drehachse erstrecken, wobei die zwischen der vorderen und der hinteren Randbegrenzung aufgespannte bzw. vorliegende Hauptverdeckfläche des ersten Verdeckelements zumindest bereichsweise einen geringeren radialen Abstand zur Drehachse aufweist als die maximale radiale Entfernung der vorderen Randbegrenzung des zweiten Verdeckelements, so daß das zweite Verdeckelement durch die hintere Randbegrenzung des ersten Verdeckelements einschiebbar ist. Demgemäß ist im allgemeinen der maximale radiale Abstand der vorderen Randbegrenzung des zweiten, nachfolgenden Verdeckelements zumindest abschnittsweise größer als der maximale radiale Abstand des am weitesten radial von der Drehachse entfernten Abschnitts der Hauptverdeckfläche des ersten Verdeckelements. Gemäß einer besonders bevorzugten Ausgestaltung ist hierbei vorgesehen, daß das zweite Verdeckelement, insbesondere die vordere Randbegrenzung des zweiten Verdeckelements, gegen einen durch Wechselwirkung des zweiten Verdeckelements, insbesondere der vorderen Randbegrenzung des zweiten Verdeckelements, mit der Hauptverdeckfläche und/oder der ersten und/oder zweiten Seitenverdeckfläche des ersten Verdeckelements hervorgerufenen Widerstand durch die hintere Randbegrenzung des ersten Verdeckelements einschiebbar ist. Das Material der Verdeckfläche ist hierbei vorzugsweise federelastisch ausgestaltet, d.h. es gibt einer Krafteinwirkung zwar nach, baut jedoch einen Widerstand auf und kehrt nach Beendigung der Kraftbeaufschlagung in den ursprünglichen Zustand zurück, Geeignete Materialien umfassen beispielsweise textile Gewebe, Folien aus federelastischen Kunststoffmaterialien oder dergleichen. Auf diese Weise gelingt eine temporäre Fixierung des ersten Verdeckelements in einer aufgerichteten, d.h. aus einer gegenüber der Horizontalen aufgeklappten Position.

Hierbei kann in einer Ausgestaltung vorgesehen sein, daß der radiale Abstand der Hauptverdeckfläche des ersten Verdeckelements zu der Drehachse zumindest bereichsweise geringer ist als die maximale radiale Entfernung der vorderen Randbegrenzung des zweiten Verdeckelements zu der gemeinsamen Drehachse.

Zweckmäßigerweise stellen bei der vorangehend geschilderten Ausführungsform eines erfindungsgemäßen Verdecks die vordere und/oder hintere Randbegrenzung von erstem und/oder zweitem Verdeckelement jeweils Verdeckbügel dar. Erfindungsgemäß kann in diesem Zusammenhaug ebenfalls vorgesehen sein, daß die ersten und zweiten Verdeckbügel im Bereich der Drehachse gegeneinander anliegen und gegen einen Widerstand gegeneinander verschwenkbar sind, so daß gegeneinander verschwenkte Verdeckbügel bereits aufgrund dieses Widerstands lagefixiert sind.

Besonders bevorzugt, insbesondere in Kombination mit den Merkmalen der vorangehend beschriebenen Ausführungsform, ist ein Verdeck, insbesondere für einen Personentransportwagen zur zumindest teilweisen Überspannung zumindest einer Öffnung zumindest einer Personenaufnahmevorrichtung, wobei das Verdeck zumindest zwei relativ zueinander um zumindest eine gemeinsame Drehachse bewegbare Verdeckelemente umfaßt und die Verdeckelemente in einer die Drehachse beinhaltenden und/oder zu dieser im wesentlichen parallel laufenden, ersten Ebene zumindest bereichsweise eine im wesentlichen bogenförmige Umfangsform aufweisen, wobei die Verdeckelemente in einer zweiten, im wesentlichen senkrecht zu der Drehachse verlaufenden, Ebene zumindest bereichsweise eine im wesentlichen kreissegmentförmige und/oder keilförmige Umfangsform aufweisen und sich die Abmessungen zumindest eines ersten Verdeckelementes und zumindest eines zweiten Verdeckelementes in der ersten Ebene so unterscheiden, daß das erste und das zweite Verdeckelement durch eine Drehung um die Drehachse, insbesondere teleskopartig, ineinander schiebbar sind.

Dabei kann insbesondere vorgesehen sein, daß das erste und/oder das zweite Verdeckelement in der ersten Ebene zumindest eine zumindest bereichsweise kreisförmige, ellipsenförmige, parabelförmige und/oder mehreckförmige, wie dreieckförmige und/oder rechteckförmige, Umfangsform aufweist bzw. aufweisen.

Bei den beiden vorgenannten Alternativen kann vorgesehen sein, daß zumindest eine einen Abstand zwischen der Drehachse und dem Umfang des ersten Verdeckelementes in der ersten Ebene bezeichnende geometrische erste Abmessung größer als eine entsprechende einen Abstand zwischen der Drehachse und dem Umfang des zweiten Verdeckelementes in der ersten Ebene bezeichnende zweite geometrische Abmessung ist und/oder zumindest ein Radius der Umfangsform des ersten Verdeckelementes in der ersten Ebene größer als zumindest ein Radius der Umfangsform des zweiten Verdeckelementes in der ersten Ebene ist.

Für das erfindungsgemäße Verdeck wird ferner vorgeschlagen, daß zumindest eine Mitnahmevorrichtung, wobei das erste Verdeckelement und zweite Verdeckelement mittels der Mitnahmevorrichtung mitnahmesicher verbunden oder verbindbar sind, insbesondere das erste Verdeckelement oder das zweite Verdeckelement nach einer Drehung des zweiten Verdeckelementes bzw. ersten Verdeckelementes, vorzugsweise aus einer gefalteten Position des Verdecks, in der das erste und zweite Verdeckelement zumindest bereichsweise ineinander geschoben sind, um zumindest einen vorbestimmten Winkel drehmitnahmesicher mit dem zweiten bzw. ersten Verdeckelement verbunden oder verbindbar ist, insbesondere das erste Verdeckelement oder das zweite Verdeckelement bei einer weiteren Drehung des zweiten Verdeckelementes bzw. des ersten Verdeckelementes mitdrehbar ist. Ist beispielsweise das erste Verdeckelement in die endgültige aufgeklappte Position verschwenkt worden, kann das zweite Verdeckelement in einer Ausführungsform einerseits über den Widerstand, den die vordere Randbegrenzung des zweiten Verdeckelements in Wechselwirkung mit der Abdeckfläche des ersten Verdeckelements erfährt, mitgenommen werden, kann jedoch auch alternativ oder zusätzlich durch die Mitnahmevorrichtung mitverschwenkt werden. Darüber hinaus kann diese Mitnahmevorrichtung die Funktion besitzen, das zweite Verdeckelement davor zu bewahren, keine Überlappung mit dem ersten Verdeckelement mehr aufzuweisen. Bei dieser Ausgestaltung stellt die Mitnahmevorrichtung somit sicher, daß die vordere Rand- bzw. Rahmenbegrenzung des zweiten Verdeckelements nicht durch die hintere Rand- bzw. Rahmenbegrenzung des ersten Verdeckelements hindurchrutscht. Beispielsweise kann eine erste Mitnahmevorrichtung einerseits befestigt sein an der hinteren Rahmenbegrenzung des ersten Verdeckelements und andererseits an der hinteren Rahmenbegrenzung des zweiten Verdeckelements, Alternativ kann eine erste Mitnahmevorrichtung befestigt sein einerseits an der vorderen Rahmenbegrenzung des ersten Verdeckelements und an der vorderen Rahmenbegrenzung des zweiten Verdeckelements. In gleicher Weise können zweite Mitnahmevorrichtungen vorliegen und befestigt sein zwischen dem Randbegrenzungen von zweitem und drittem Verdeckelement.

Mit der Erfindung wird ferner vorgeschlagen, daß das erste Verdeckelement und/oder das zweite Verdeckelement zumindest einen Verdeckbügel umfaßt bzw. umfassen, wobei der Verdeckbügel insbesondere über zumindest eine Elementbasis, mit der Drehachse des ersten und/oder zweiten Verdeckelementes verbunden oder verbindbar ist, vorzugsweise die Elementbasis und der Verdeckbügel einstückig ausgebildet sind und/oder, insbesondere lösbar, miteinander verbunden oder verbindbar sind.

Bei der vorgenannten Ausführungsform kann ferner vorgesehen sein, daß an dem Verdeckbügel zumindest ein Abschirmelement, wie zumindest eine Haube, zumindest eine, insbesondere textile, vorzugsweise mehrlagige, Bespannung und/oder Lamelle, angeordnet oder anordbar ist, wobei das erste und/oder das zweite Verdeckelement vorzugsweise jeweils zumindest zwei Verdeckbügel zur Anordnung des Abschirmelementes, insbesondere der Bespannung umfaßt bzw. umfassen.

Weiterhin wird mit der Erfindung vorgeschlagen, daß die Mitnahmevorrichtung mit zumindest einem Verdeckbügel, zumindest einer Elementbasis und/oder zumindest einem Abschirmelement zumindest indirekt verbunden oder verbindbar ist und/oder die Mitnahmevorrichtung zumindest einen Teil zumindest einer Innenbespannung des Verdecks und/oder zumindest eine Federeinrichtung umfaßt.

Eine vorteilhafte Ausführungsform der Erfindung sieht vor, daß zumindest ein relativer Winkel zwischen dem ersten Verdeckelement und/oder dem zweiten Verdeckelement kontinuierlich und/oder in diskreten Schritten veränderbar und/oder einstellbar ist, insbesondere das erste Verdeckelement und/oder das zweite Verdeckelement jeweils in zumindest einer Winkelposition um die Drehachse fixierbar ist bzw. sind, wobei vorzugsweise eine Vielzahl von diskreten und/oder kontinuierlichen Winkelpositionen vorgesehen ist.

Schließlich wird für das erfindungsgemäße Verdeck vorgeschlagen, daß das erste und/oder das zweite Verdeckelement, zumindest eine Elementbasis, zumindest ein Abschirmelement, zumindest ein Verdeckbügel und/oder zumindest eine Mitnahmevorrichtung zumindest bereichsweise zumindest ein Kunststoffmaterial, zumindest ein Verbundmaterial, insbesondere Glasfaserverbundmaterial und/oder zumindest ein Metallmaterial, wie Aluminium, Stahl und/oder zumindest eine Legierung, umfaßt bzw. umfassen.

Ferner liefert die Erfindung einen Personentransportwagen umfassend zumindest ein erfindungsgemäßes Verdeck, wobei das Verdeck vorzugsweise reversibel lösbar mit dem Personentransportwagen verbindbar oder verbunden ist.

Dabei wird mit der Erfindung vorgeschlagen, daß der Personentransportwagen gekennzeichnet ist durch zumindest eine Personenaufnahmevorrichtung, wobei die Personenaufnahmevorrichtung zumindest einen Rahmen umfaßt und von einer Sitzkonfiguration, in der die Person in einer im wesentlichen sitzenden Position aufnehmbar ist, in eine Korbkonfiguration, in der die Person im wesentliche liegend aufnehmbar ist, und/oder umgekehrt überführbar ist, wobei der Neigungswinkel zumindest einer in der Sitzkonfiguration zumindest eine Rückenlehne festelegenden ersten Rahmenkomponente, insbesondere relativ zu zumindest einem Hauptrahmen des Personentransportwagens über zumindest eine erste Drehvorrichtung einstellbar ist und der Rahmen zumindest eine in der Sitzkonfiguration zumindest eine Sitzfläche festlegende zweite Rahmenkomponente umfaßt, wobei zumindest ein Winkel zwischen der ersten und der zweiten Rahmenkomponente unabhängig von der ersten Drehvorrichtung über eine die erste und die zweite Rahmenkomponente verbindende zweite Drehvorrichtung einstellbar ist.

Weiterhin wird mit der Erfindung vorgeschlagen, daß der Rahmen zumindest eine, vorzugsweise in der Sitzkonfiguration eine Fußstütze festlegende, dritte Rahmenkomponente aufweist, wobei die zweite und dritte Rahmenkomponente über zumindest eine dritte Drehvorrichtung miteinander verbunden sind, insbesondere zumindest ein Winkel zwischen der zweiten und dritten Rahmenkomponente einstellbar ist.

Bei den vorgenannten Alternativen kann vorgesehen sein, daß die Personenaufnahmevorrichtung, zumindest in der Korbkonfiguration, eine im wesentlichen ebene Liegefläche, insbesondere gebildet durch zumindest einen Teil der Rückenlehne und/oder zumindest einen Teil der Sitzfläche, umfasst.

Für den Personentransportwagen wird ferner vorgeschlagen, daß dieser aufweist zumindest einen mit der ersten und/oder der zweiten Rahmenkomponente, insbesondere lösbar, verbindbare und/oder mit der ersten und/oder der zweite Rahmenkomponente zumindest bereichsweise einstückig ausgebildeten Bügel, wobei der Bügel vorzugsweise in der Sitzkonfiguration als Sicherheitsbügel verwendbar ist und /oder in der Korbkonfiguration als Tragegriff verwendbar ist.

Dabei ist bevorzugt, daß mittels der ersten Drehvorrichtung der Winkel zwischen der ersten Rahmenkomponente und dem Hauptrahmen, mittels der zweiten Drehvorrichtung der Winkel zwischen der ersten und der zweiten Rahmenkomponente und/oder mittels der dritten Drehvorrichtung der Winkel zwischen der zweiten und dritten Rahmenkomponente kontinuierlich und/oder in diskreten Schritten einstellbar ist bzw. sind und/oder mittels der ersten Drehvorrichtung die erste Rahmenkomponente relativ zu dem Hauptrahmen, mittels der zweiten Drehvorrichtung die zweite Rahmenkomponente relativ zu der ersten Rahmenkomponente und/oder mittels der dritten Drehvorrichtung die dritte Rahmenkomponente relativ zu der zweiten Rahmenkomponenten klapp- bzw. drehbar und gegebenenfalls fixierbar ist bzw. sind.

Ferner ist es möglich, daß der Rahmen, insbesondere die erste, zweite oder dritte Rahmenkomponente, mittels zumindest einer Verbindungsvorrichtung an dem Hauptrahmen, insbesondere reversibel lösbar, befestigbar ist.

Weiterhin kann erfindungsgemäß vorgesehen sein, daß das Verdeck mit der ersten, der zweiten und/oder der dritten Rahmenkomponente und/oder der ersten , zweiten und/oder dritten Drehvorrichtung verbunden oder verbindbar ist.

Ferner kann ein erfindungsgemäßer Personentransportwagen gekennzeichnet sein durch zumindest eine an zumindest einer ersten, zweiten oder dritten Rahmenkomponente, insbesondere reversibel lösbar, befestigbare und/oder mit zumindest einer ersten, zweiten oder dritten Rahmenkomponente einstückig ausgebildete, vorzugsweise die Sitzfläche und/oder die Rükkenlehne bildende, Sitzkomponente, insbesondere umfassend zumindest eine, vorzugsweise textile, Bespannung und/oder zumindest eine im wesentlichen feste Auflage, wie zumindest eine Schalenkomponente. Dabei kann die zweite Rahmenkomponente derartig ausgeformt sein, daß sie zumindest in der Sitzkonfiguration, insbesondere mindestens zwei seitliche, Armstützen bereitstellt.

Weiterhin kann ein erfindungsgemäßer Personentransportwagen gekennzeichnet sein durch zumindest eine Verbindungsvorrichtung zur reversibel lösbaren Verbindung zumindest einer ersten Komponente, insbesondere des Hauptrahmens, und zumindest der Personenaufuahmevorrichtung als zweiter Komponente des Personentransportwagens, wobei die Verbindungsvorrichtung zumindest eine Verriegelungseinrichtung mit zumindest einem mit der ersten Komponente in Wirkverbindung stehenden ersten Verriegelungselement, zumindest einem mit der zweiten Komponente in Wirkverbindung stehenden zweiten Verriegelungselement und zumindest einer Betätigungsvorrichtung umfasst, wobei die Verriegelungseinrichtung zumindest eine Verriegelungsposition, in der das erste Verriegelungselement und das zweite Verriegelungselement in mechanischem Eingriff miteinander stehen, und zumindest eine Entriegelungsposition, in der der mechanische Eingriff gelöst ist, aufweist, wobei das erste und/oder das zweite Verriegelungselement mittels der Betätigungsvorrichtung zur Überführung der Verriegelungseinrichtung in die Verriegelungsposition und/oder Entriegelungsposition bewegbar ist bzw. sind, wobei die Betätigungsvorrichtung zumindest eine erste Betätigungseinrichtung und zumindest eine zweite Betätigungseinrichtung umfasst und durch eine Betätigung der ersten Betätigungseinrichtung und/oder durch eine Betätigung der zweiten Betätigungseinrichtung das erste Verriegelungselement von einer Verriegelungs- in eine Entriegelungsstellung, oder umgekehrt, gleichsinnig bewegbar ist und/oder durch eine Betätigung der ersten Betätigungseinrichtung und/oder durch eine Betätigung der zweiten Betätigungseinrichtung das zweite Verriegelungselement von einer Verriegelungs- in eine Entriegelungsstellung, oder umgekehrt, gleichsinnig bewegbar ist und wobei vorzugsweise die erste und die zweite Betätigungseinrichtung von verschiedenen, insbesondere gegenüberliegenden, Seiten der Verbindungsvorrichtung aus betätigbar sind.

Dabei sind unter anderem auch solche Personentransportwagen bevorzugt, ferner umfassend zumindest ein Rad, zumindest einen Radträger, zumindest einen Griff, zumindest eine Schubstange, zumindest einen Hilfssitz, zumindest ein Trittbrett und/oder zumindest ein, vorzugsweise faltbares, Verdeck, insbesondere in Form einer Abdeckhaube, eines Baldachins, einer Überdachung, eines Vordachs, eines Schirms und/oder einer Haube.

Für den Personentransportwagen kann auch vorgesehen sein, daß die Verbindungseinrichtung zumindest eine erste Kraftauf6aueinrichtung, insbesondere umfassend zumindest eine Federeinrichtung, mittels der das erste Verrieglungselement in zumindest eine Verrieglungsposition oder zumindest eine Entriegelungsposition zwingbar ist und/oder zumindest eine zweite Kraftaufbaueinrichtung, insbesondere umfassend zumindest eine Federeinrichtung, mittels der das zweite Verrieglungselement in zumindest eine Verrieglungsposition oder zumindest eine Entriegelungsposition zwingbar ist, umfasst.

Dabei ist bevorzugt, daß die erste Komponente und das erste Verriegelungselement und/oder die zweite Komponente und das zweite Verriegelungselement zumindest bereichsweise einstückig ausgebildet sind.

In einer vorteilhaften Ausführungsform kann auch vorgesehen sein, daß das erste Verriegelungselement und/oder das zweite Verriegelungselement einerseits und die erste Betätigungseinrichtung und/oder die zweite Betätigungseinrichtung andererseits zumindest bereichsweise einstückig ausgebildet sind.

Weiterhin kann eine Ausführungsform vorgesehen sein, bei der das erste Verriegelungselement oder der zweite Verriegelungselement, insbesondere mittels der ersten und zweiten Betätigungseinrichtung, bewegbar gelagert ist, wobei vorzugsweise das zweite bzw. das erste Verriegelungselement im wesentlichen ortfest zumindest indirekt an der zweiten bzw. der ersten Komponente befestigt ist und/oder in dieser ortsfest ausgebildet ist.

In einer alternativen Ausführungsform kann ferner berücksichtigt sein, daß das erste Verriegelungselement oder das zweite Verriegelungselement um zumindest eine Drehachse drehbar gelagert ist, wobei insbesondere sowohl mittels der ersten Betätigungseinrichtung als auch mittels der zweiten Betätigungseinrichtung ein gleichsinniges Drehmoment auf das erste bzw. das zweite Verriegelungselement ausübbar ist.

Auch ist es möglich, daß das erste Verriegelungselement und das zweite Verriegelungselement zumindest bereichsweise zueinander komplementäre Oberflächenformen aufweisen und/oder das erste Verriegelungselement und/oder das zweite Verriegelungselement zumindest einen Fanghaken, zumindest einen Rasthaken, zumindest eine Stange und/oder zumindest einen Stift umfaßt bzw. umfassen.

In einer weiteren Ausgestaltung ist vorgesehen, daß die erste Betätigungseinrichtung und die zweite Betätigungseinrichtung jeweils in Form zumindest eines longitudinal bewegbaren Elementes ausgebildet sind, wobei ein Ende des jeweiligen Elementes zumindest zeitweise Angriff an dem ersten Verriegelungselementes oder dem zweiten Verriegelungselement findet.

Schließlich liefert die Erfindung einen Personentransportwagen in Form eines Kinderwagens.

Selbstverständlich kann das erfindungsgemäße Verdeck auch für andere Zwecke als bei Personentransportwagen eingesetzt werden. Beispielsweise kommen Anwendungen als Regen- und/oder Sonnenschutz, z.B. für Straßencafes, gegebenenfalls gekoppelt mit einem Mast bzw. Mastfuß, als Markise, als Zelt, Unterstand, Abdeckung und Garage in Frage. Demgemäß sind auch ein Regen- und/oder Sonnenschutz, eine Markise, ein Zelt, ein Unterstand, eine Abdekkung und eine Garage umfassend oder bestehend aus mindestens einem erfindungsgemäßen Verdeck Gegenstand der vorliegenden Erfindung.

Der Erfindung liegt somit die überraschende Erkenntnis zugrunde, daß ein Verdeck für einen Personentransportwagen sowie einen Kinderwagen, so ausgestaltet werden kann, daß das Verdeck sowohl für eine Personenaufnahmevorrichtung in Form eines Sitzes als auch in Form einer Wanne bzw. eines Korbes eingesetzt werden kann, insbesondere je nach Bedarf unterschiedliche Raumbereiche abdecken kann, gleichzeitig im verstauten Zustand einen geringen Platzbedarf aufweist und eine Überbeanspruchung eines Verdeckmaterials, insbesondere bei einem Zusammenlegen des Verdecks in einem feuchten Zustand, verhindert wird, indem das Verdeck aus zumindest zwei Elementen besteht, die teleskopartig bzw. fächerartig ineinander geschoben werden können.

Weitere Merkmale und Vorteile der Erfindung ergeben sich aus der nachfolgenden Beschreibung, in der Ausführungsbeispiele der Erfindung anhand schematischer Zeichnungen beispielhaft erläutert sind. Dabei zeigt:
- Figur 1:: einen Kinderwagen mit einem Hauptkörper und einer Kinderaufnahmevorrichtung,
- Figur 2:: den Kinderwagen der Figur 1, wobei die Kinderaufnahmevorrichtung mit entsprechenden Stoffelementen bespannt ist sowie ein erfindungsgemäßes Verdeck aufweist;
- Figur 3:: eine vergrößerte Detailansicht des Ausschnitts A der Figur 1, in dem eine Verbindungsvorrichtung dargestellt ist;
- Figur 4a:: eine Schnittansicht der Verbindungsvorrichtung der Figur 3 in einer verriegelten Position;
- Figur 4b:: eine Schnittansicht der Verbindungsvorrichtung der Figur 3 in einer entriegelten Position;
- Figur 4c:: eine Schnittansicht der Verbindungsvorrichtung der Figur 3 in einer entriegelten Position;
- Figur 5:: eine perspektivische Ansicht des Kinderwagens der Figur 1 nach einer Lösung der Verbindung zwischen der Kinderaufhahmevorrichtung und dem Hauptkörper;
- Figur 6a:: eine Seitenansicht des Kinderwagens der Figur 1, in der sich die Kinderaufnahmevorrichtung in einen Sitzkonfiguration befindet;
- Figur 6b:: eine Seitenansicht des Kinderwagens der Figur 6a, nachdem die Kinderaufnahmevorrichtung um eine erste Drehachse zur Überführung in einer Korbkonfiguration geschwenkt wird;
- Figur 6c:: eine Seitenansicht des Kinderwagens der Figur 6b, bei dem ein Komponente der Kinderaufnahmevorrichtung zur Überführung derselben in einer Korbkonfiguration um eine zweite Drehachse geschwenkt wird;
- Figur 6d:: eine Seitenansicht des Kinderwagens der Figur 6c, nachdem eine dritte Komponente der Kinderaufnahmevorrichtung zur Überführung derselben in eine Korbkonfiguration um eine dritte Drehachse geschwenkt wurde;
- Figur 7a:: eine Seitenansicht einer Kinderaufnahmevorrichtung in Form einer Wanne umfassend ein erfindungsgemäßes Verdeck im gefalteten Zustand;
- Figur 7b:: eine perspektivische Ansicht der Kinderaufnahmevorrichtung der Figur 7a;
- Figur 7c:: eine Seitenansicht der Kinderaufnahmevorrichtung der Figur 7a in einem entfalteten Zustand des Verdecks;
- Figur 7d:: eine perspektivische Ansicht auf die Kinderaufnahmevorrichtung der Figur 7c;
- Figur 8a:: eine perspektivische Ansicht auf einen Kinderwagen umfassend eine weitere Ausführungsform eines erfindungsgemäßen Verdecks im entfalteten Zustand;
- Figur 8b:: eine Schnittansicht des Verdecks der Figur 8a;
- Figur 8c:: eine perspektivische Ansicht auf den Kinderwagen der Figur 8a im halb gefalteten Zustand des Verdecks;
- Figur 8d:: eine Schnittansicht des Verdecks der Figur 8c;
- Figur 8e:: eine perspektivische Ansicht auf den Kinderwagen der Figur 8a im zusammengefalteten Zustand des Verdecks;
- Figur 8f:: eine Schnittansicht des Verdecks der Figur 8e;
- Figur 9:: eine Seitenansicht eines Kinderwagens umfassend eine Kinderaufnahmevorrichtung gemäß der Figur 8a;
- Figur 10a: einen Kinderwagen umfassend eine Kinderaufnahmevorrichtung gemäß der Figur 6a mit einem Verdeck im entfalteten Zustand;
- Figur 10b:: eine Seitenansicht des Kinderwagens der Figur 10a im gefalteten Zustand des Verdecks;
- Figur 11a:: eine Seitenansicht eines Kinderwagens umfassend eine Kinderaufnahmevorrichtung gemäß Figur 6d in einer Korbkonfiguration mit einem entfalteten Verdeck;
- Figur 11b:: eine Seitenansicht des Kinderwagens der Figur 11a im gefalteten Zustand des Verdecks; und
- Figur 12:: eine schematische Seitenansicht einer Ausführungsform eines erfindungsgemäßen Verdecks.

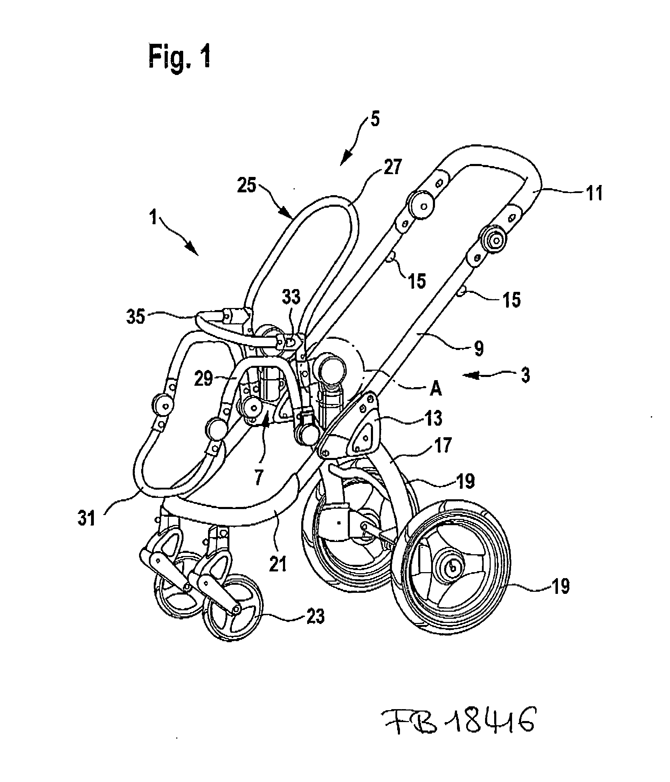

Figur 1 zeigt eine perspektivische Ansicht eines Personentransportwagens in Form eines Kinderwagens 1. Der Kinderwagen 1 umfaßt einen Hauptkörper bzw. Rahmen 3 und eine Personenaufnahmevorrichtung in Form einer Kinderaufnahmevorrichtung 5. Hierbei ist zu beachten, daß in Figur 1 lediglich ein Grundkörper der Kinderaufnahmevorrichtung 5 dargestellt ist. Die Kinderaufnahmevorrichtung 5 ist mit dem Rahmen 3 über eine Verbindungsvorrichtung 7 lösbar verbunden. Der Rahmen 3 umfaßt unter anderem eine Schubstange 9 mit einem Handgriff 11. Über einen Faltmechanismus 13, der über Auslösehebel 15 entriegelbar ist, ist die Schubstange 9 mit einem Hinterradträger 17, an welchem Hinterräder 19 befestigt sind, und einem Vorderradträger 21, an dem Vorderräder 23 angebracht sind, verbunden. Die Kinderaufnahmevorrichtung 5 umfaßt, wie später ausführlicher erläutert wird, einen Rahmen 25, der eine ersten Rahmenkomponente 27, eine zweite Rahmenkomponente 29 sowie eine dritte Rahmenkomponente 31 umfaßt. In Figur 1 befindet sich die Kinderaufnahmevorrichtung 5 in einer Sitzkonfiguration, in welcher die erste Rahmenkomponente 27 im wesentlichen eine Rückenlehne eines Sitzes festlegt, die zweite Rahmenkomponente 29 im wesentlichen eine Sitzfläche festlegt bzw. eine Seitenführung bzw. Armlehne für ein in der Kinderaufnahmevorrichtung 5 angeordnetes Kind bereitstellt und die dritten Rahmenkomponente 31 eine Fußauflage festlegt. Wie aus Figur 1 ersichtlich, kann an dem Rahmen 25 über eine Verbindungseinrichtung 33 ein Bügel 35 lösbar angebracht werden. Dieser Bügel 35 verhindert insbesondere in der in Figur 1 dargestellten Sitzkonfiguration der Kinderaufnahmevorrichtung 5 ein Herausfallen des Kindes aus der Kinderaufnahmevorrichtung 5, dient also als Sicherheitsbügel, während der Bügel 35, wie später erläutert werden wird, in einer Korbkonfiguration der Kinderaufnahmevorrichtung 5 als Tragbügel einsetzbar ist.

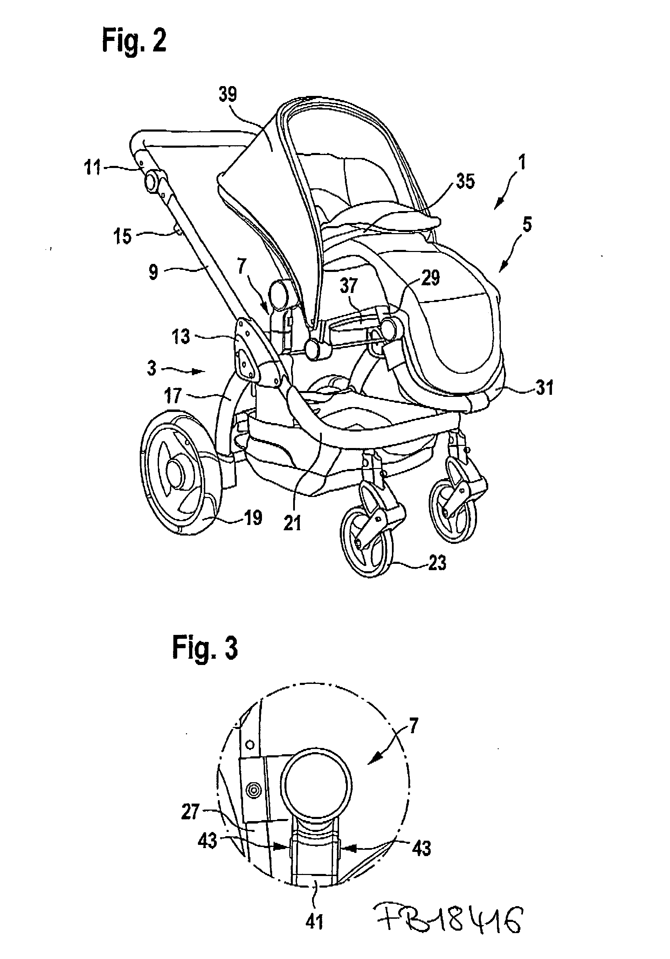

Figur 2 zeigt eine Seitenansicht des Kinderwagens 1 der Figur 1. Im Unterschied zu der Figur 1 ist der Rahmen 25 der Kinderaufnahmevorrichtung 5 mit einem Stoffbezug 37 überzogen, wodurch die entsprechende Sitzfläche und Rücklehne für ein in der Kinderaufnahmevorrichtung 5 aufzunehmendes Kind bereitgestellt wird. Hierbei ist zu beachten, daß zwar in Figur 2 der Rahmen 25 mit einem textilen Stoff überzogen ist, die Erfindung jedoch nicht hierauf beschränkt ist. Insbesondere können an dem Rahmen 25, insbesondere den Rahmenkomponenten 27, 29, 31, auch im wesentlichen feste bzw. unflexible Elemente, wie Hartschalenelemente, zur Bereitstellung einer Rückenlehne, einer Sitzfläche und/oder einer Fußauflage angebracht werden. Ferner ist in Figur 2 an der Kinderaufnahmevorrichtung 5 ein erfindungsgemäßes Verdeck 39, welches sich in Figur 2 im gefalteten Zustand befindet, angeordnet.

Im folgenden wird nun der Aufbau und die Funktionsweise der Verbindungsvorrichtung 7 detailliert erläutert. Obwohl in der dargestellten Ausführungsform die Verbindungsvorrichtung 7 zur Verbindung der Kinderaufnahmevorrichtung 5 mit dem Rahmen 3 eingesetzt wird, ist diese Ausführungsform nicht auf diese Anwendung beschränkt. So können durch die dargestellte Verbindungsvorrichtung 7 verschiedene Komponenten eines Personentransportwagens, insbesondere des Kinderwagens 1, lösbar miteinander verbunden werden. So könnte beispielsweise die Verbindungseinrichtung 33 die Merkmale der Verbindungsvorrichtung 7 aufweisen, das Verdeck 39 über eine entsprechende Verbindungsvorrichtung mit der Kinderaufnahmevorrichtung 5 verbunden sein, oder weitere Komponenten, wie ein Zusatzsitz oder ein Trittbrett, mit dem Rahmen 3 über eine solche Verbindungsvorrichtung verbunden werden.

Wie Figur 3 zu entnehmen ist, wird die Verbindungsvorrichtung 7 in der dargestellten Ausführungsform eingesetzt, um die Kmderamhahmevomchtung 5, insbesondere über die erste Rahmenkomponente 27, mit dem Rahmen 3, insbesondere über ein Anschlußelement 41, lösbar zu verbinden. Um zu verhindern, daß die Kinderaufnahmevorrichtung 5 sich unbeabsichtigt von dem Rahmen 3 löst, umfaßt die Verbindungsvorrichtung 7 eine nachfolgend detaillierter beschriebene Verriegelungseinrichtung 45. Die Verriegelungseinrichtung 45 weist Betätigungseinrichtungen in Form von zwei Druckknöpfen 43 auf, wobei eine erste Betätigungseinrichtung in eine Fahrtrichtung des Personentransportwagens angeordnet ist, während die zweite Betätigungseinrichtung entgegen der Fahrtrichtung angeordnet ist. Durch eine Betätigung bzw. ein Niederdrücken von zumindest einem der Druckknöpfe 43 läßt sich die Verriegelungseinrichtung 45 von einer Verriegelungsposition in eine Entriegelungsposition überführen. Befindet sich die Verriegelungseinrichtung 45 in einer Entriegelungsposition, so läßt sich die Kinderaufnahmevorrichtung 5 von dem Rahmen 3 lösen.

Der in der Figur 1 dargestellte Kinderwagen 1 weist zwei Verbindungsvorrichtungen 7, jeweils eine auf jeder Seite der Kinderaumahmevorrichtung 5, auf. Dabei kann vorgesehen sein, daß sowohl beide Verbindungsvorrichtungen 7 eine entsprechende Verriegelungseinrichtung 45 umfassen. In einer alternativen Ausführungsform kann auch vorgesehen sein, daß lediglich eine der Verbindungsvorrichtungen 7 eine entsprechende Verriegelungseinrichtung 45 aufweist.

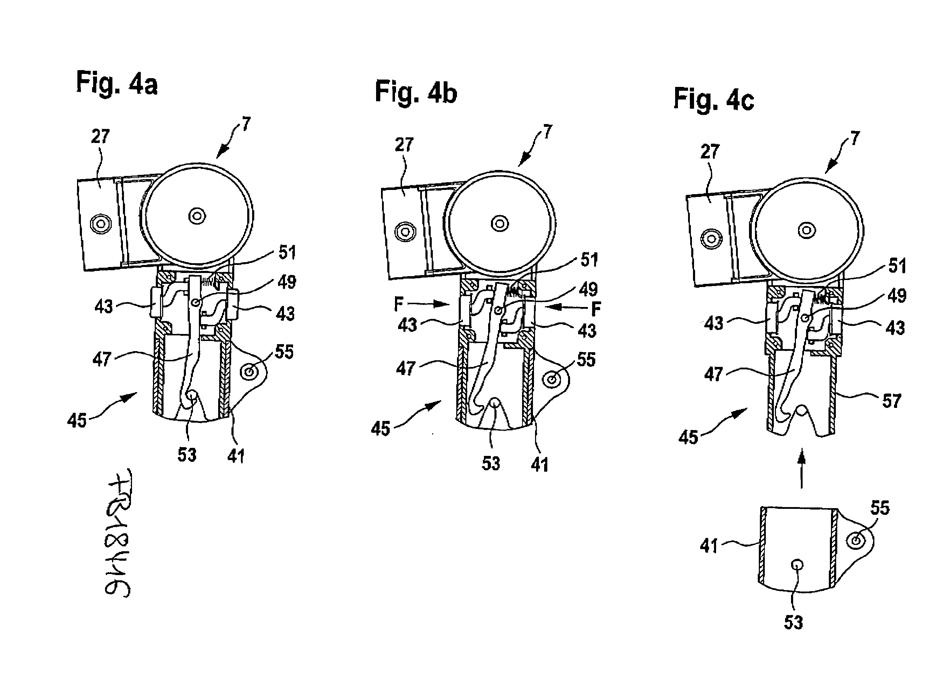

In Figur 4a ist eine Schnittansicht durch die Verbindungsvorrichtung 7 der Figur 3 dargestellt. Die Verbindungsvorrichtung 7 weist eine Verriegelungseinrichtung 45 auf. Die Verriegelungseinrichtung 45 weist ein erstes Verriegelungselement in Form eines Rasthakens 47 auf. Der Rasthaken 47 ist um eine Achse 49 drehbar gelagert. Ferner umfaßt die Verriegelungseinrichtung 45 eine Krafterzeugungseinrichtung in Form einer Federeinrichtung 51. Über die Federeinrichtung 51 wird der Rasthaken 47 in die in Figur 4a gezeigte Stellung gezwungen. Die Verriegelungseinrichtung 45 weist ferner ein zweites Verriegelungselement in Form eines Stiftes 53 auf. Der Stift 53 ist insbesondere einstückig mit dem Anschlußelement 41, welches insbesondere über eine Schraubverbindung 55 mit dem Rahmen 3 verbindbar ist, ausgebildet. In der in Figur 4a dargestellten Konstellation befindet sich die Verriegelungseinrichtung 45 in einer Verriegelungsposition. Insbesondere findet der Rasthaken 47 Angriff an dem Stift 53, so daß die Kinderaufnahmevorrichtung 5 nicht von dem Anschlußelement 41 gelöst werden kann.

Um die Kinderaufnahmevorrichtung 5 von dem Rahmen 3 zu entfernen, wird die 'üerriegelungseinrichtung 45 in eine Entriegelungsposition überführt, wie sie insbesondere in Figur 4b dargestellt ist. Um die Verriegelungseinrichtung 45 in die Entriegelungsposition zu überführen, wird der Rasthaken 47 aus der in Figur 4a dargestellten Verriegelungsposition die in Figur 4b dargestellte Entriegelungsposition, in der er keinen Angriff mehr an dem Stift 53 findet, überfuhrt. Zu diesem Zweck wird einer der Druckknöpfe 43 von einem Benutzer mit einer Kraft F beaufschlagt, wodurch bewirkt wird, daß der Rasthaken 47 sich um die Achse 49 gegen die Kraft der Federeinrichtung 51 dreht. Obwohl, wie in Figur 4b dargestellt ist, gleichzeitig beide Druckknöpfe 43 niedergedrückt werden können, reicht für eine Überführung der Verriegelungseinrichtung 45 aus der Verriegelungs- in die Entriegelungsposition eine Betätigung ausschließlich eines Druckknopfes 43 aus. So führt eine alleinige Betätigung von einem der Druckknöpfe 43, unabhängig davon, welcher der Druckknöpfe 43 betätigt wird, zu einer identischen bzw. gleichsinnigen Bewegung des Rasthakens 47, d.h. zu einer Drehung des Rasthakens 47 um die Achse 49 in den Figuren 4a und 4b im Uhrzeigersinn.

Die Kinderaufnahmevorrichtung 5 ist derartig ausgestaltet, daß eine Anordnung der Kinderaufnahmevorrichtung 5 in Fahrtrichtung und entgegen der Fahrtrichtung des Kinderwagens 1 möglich ist. Aufgrund der Geometrie des Rahmens 3 sowie verschiedener Aufbauten, die an dem Rahmen 3 und die Kinderaufnahmevorrichtung 5 angebracht werden können, kann es vorkommen, daß eine der Betätigungseinrichtungen bzw. Druckknöpfe 43 von einem Benutzer nicht leicht erreichbar ist, während der andere Druckknopf 43 leicht zugänglich ist. Die Verriegelungseinrichtung 45 führt somit zu dem Vorteil, daß ein unkompliziertes Entriegeln der Verbindungsvorrichtung 7 in jeder Konfiguration des Kinderwagens 1 möglich ist. Dies wird dadurch erreicht, daß die Betätigungseinrichtungen so mit einem der Verriegelungselemente, im vorliegenden Fall dem ersten Verriegelungselement in Form des Rasthakens 47, mechanisch in Wirkverbindung stehen, daß ein Betätigen einer der Betätigungseinrichtungen, unabhängig davon, um welche der Betätigungseinrichtung es sich handelt eine Bewegung dieses Verriegelungselementes in eine gleichbleibende Richtung bewirkt.

Nach einer Überführung der Verriegelungseinrichtung 45 in eine Entriegelungsposition kann die Kinderaufnahmevorrichtung 5 von dem Rahmen 3 gelöst werden. Wie insbesondere Figur 4c zu entnehmen ist, wird hierzu ein Schaft 57 aus dem Anschlußelement 41 herausgezogen. Insbesondere um zu erreichen, daß sich der Stift 53 in einer festgelegten Position relativ zu dem Rasthaken 47 befindet, wenn die Kinderaufnahmevorrichtung 5 an dem Rahmen 3 befestigt wird, weißt der Schaft 57 eine im wesentlichen V-förmige Aussparung 59 auf, in die der Stift 53 gleitet, wenn der Schaft 57 in das Anschlußelement 41 eingeführt wird.

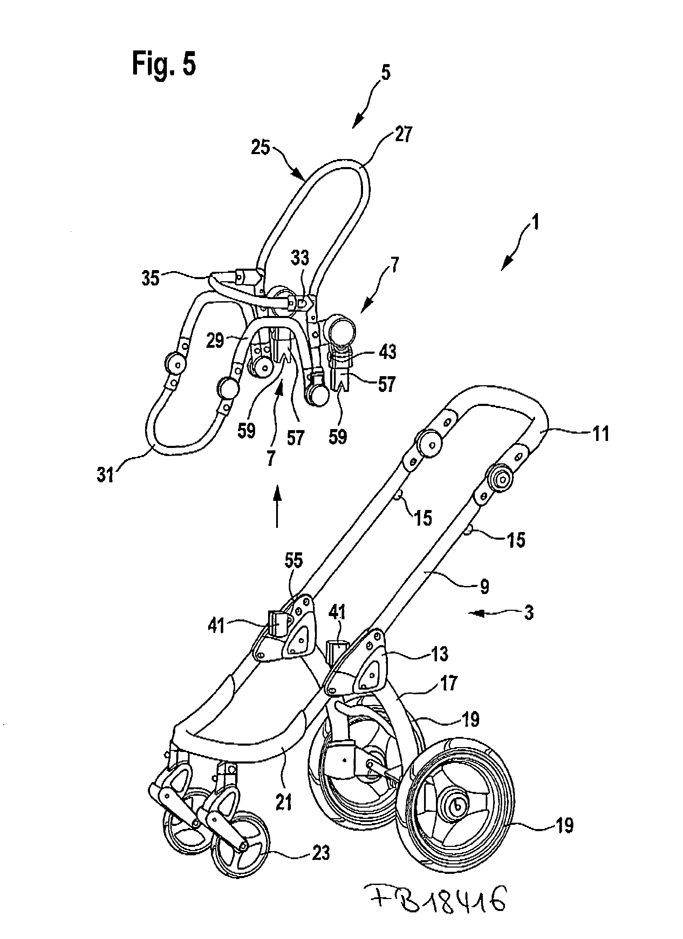

In Figur 5 ist der Kinderwagen 1 der Figur 1 dargestellt, nachdem die Verbindung zwischen der Kinderaufnahmevorrichtung 5 und dem Rahmen 3 durch Betätigung der Verbindungsvorrichtung 7 und durch Anheben der Kinderaufnahmevorrichtung 5 gelöst wurde.

Im folgenden werden nun die Einstellmöglichkeiten der Kinderaufnahmevorrichtung 5 erläutert, um die Variabilität dieser Kinderaufnahmevorrichtung 5 zu zeigen. Insbesondere wird erläutert, wie die Kinderaufnahmevorrichtung 5 von der in Figur 1 dargestellten Sitzkonfiguration in eine Korb- bzw. Wannenkonfiguration überfuhrt werden kann.

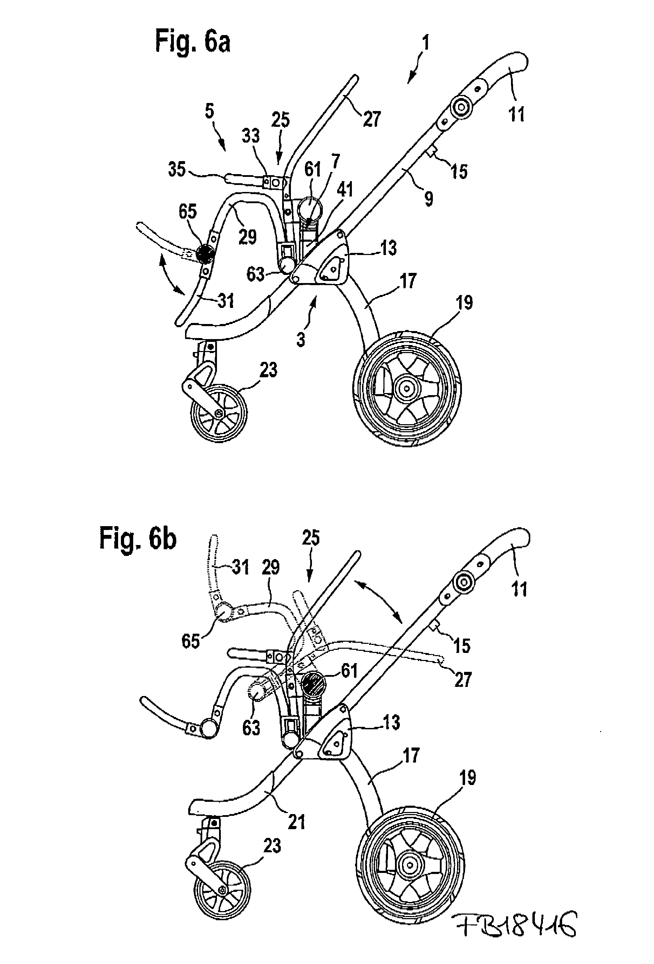

Wie insbesondere Figur 6a zu entnehmen ist, weist die Kinderaufnahmevorrichtung 5 eine erste Drehvorrichtung 61, mittels der die erste Rahmenkomponente 27 schwenkbar mit dem Rahmen 3 über die Verbindungsvorrichtung 7 verbunden ist, auf. Mittels der ersten Drehvorrichtung 61 läßt sich ein Winkel zwischen dem Rahmen 3 und der ersten Rahmenkomponente 27 bzw. der gesamten Kinderaufnahmevorrichtung 5 einstellen. Dabei kann vorgesehen sein, daß die Einstellung stufenlos erfolgen kann oder über die Drehvorrichtung 61 der Winkel in diskreten Schritten verändert werden kann. Insbesondere kann die erste Drehvorrichtung 61 dazu verschiedene Rastpositionen aufweisen in denen die erste Drehvorrichtung 61 vorzugsweise festgestellt werden kann.

Die zweite Rahmenkomponente 29 ist über eine zweite Drehvorrichtung 63 mit der ersten Rahmenkomponente 27 verbunden. Die zweite Drehvorrichtung 63 ermöglicht es, daß ein Winkel zwischen der ersten Rahmenkomponente 27 und der zweiten Rahmenkomponente 29 stufenlos und/oder in diskreten Schritten verändert werden kann. In der in Figur 6a dargestellten Sitzkonfiguration der Kinderaufnahmevorrichtung 5 legt die erste Rahmenkomponente 27 im wesentlichen eine nicht dargestellte Rückenlehne fest, während die zweite Rahmenkomponente eine in Figur 6a nicht dargestellte Sitzfläche festlegt. Die Rückenlehne und Sitzfläche entstehen durch Befestigung eines Stoffüberzuges oder entsprechender Sitzschalenkomponenten an dem Rahmen 25. Somit ermöglicht es die zweite Drehvorrichtung 63, daß in der in Figur 6a dargestellten Sitzkonfiguration ein Winkel zwischen der Rückenlehne und Sitzfläche eingestellt werden kann.

Schließlich ist die insbesondere als Fußraste dienende dritte Rahmenkomponente 31 über eine dritte Drehvorrichtung 65 mit der zweiten Rahmenkomponente 29 verbunden. In der in Figur 6a dargestellten Sitzkonfiguration ermöglicht die dritte Drehvorrichtung 65 somit eine stufenlose Einstellung und/oder eine Einstellung in diskreten Schritten einer Beinauflage relativ zu der durch die zweite Rabmenkomponente 29 festgelegten Sitzfläche. So können die Beine eines in der Kinderaufnahmevorrichtung 5 sitzenden Kindes wahlweise hochgelegt oder herunterhängen gelassen werden. Bevorzugt weist zumindest eine der Drehvorrichtungen 61, 63, 65 zumindest ein Bedienelement auf, durch welches die entsprechende Drehvorrichtung 61, 63, 65 in einer gewünschten Position verriegelt werden kann bzw. eine entsprechende Verriegelung zur Verstellung der relativen Lagen der Rahmenkomponenten 27, 29, 31 zueinander bzw. des Rahmens 25 zu dem Rahmen 3 des Kinderwagens 1 veränderbar ist.

Im folgenden wird nun erläutert, wie die Kinderaufnahmevorrichtung 5 aus der in Figur 6a dargestellten Sitzkonfiguration in eine Wannen- bzw. Korbkonfiguration überführt werden kann. Gemäß Figur 6b wird dazu zunächst der Rahmen 25 der Kinderaufnahmevorrichtung 5 relativ zu dem Rahmen 3 des Kinderwagens 1 über die erste Drehvorrichtung 61 gekippt. Insbesondere wird eine durch die erste Rahmenkomponente 27 festgelegte Rückenlehne in eine Position, die im wesentlichen parallel zu einer Oberfläche, auf welcher der Kinderwagen 1 angeordnet ist, ausgerichtet ist, gebracht.

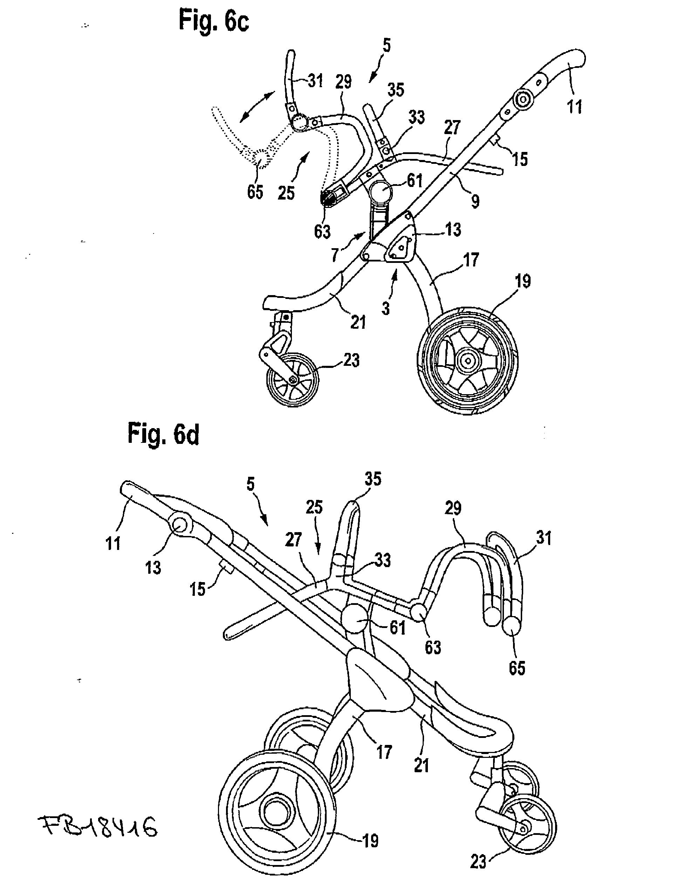

Durch eine anschließende Betätigung der zweiten Drehvorrichtung 63 kann dann beispielsweise anschließend die zweite Rahmenkomponente 29 samt der dritten Rahmenkomponente 31 relativ zu der ersten Rahmenkomponente 27 verschwenkt werden, wie in Figur 6c dargestellt Insbesondere kann der Rahmen 25 auf diese Weise in eine Konfiguration gebracht werden, in welcher sich eine Fläche der durch die ersten Rahmenkomponente 27 festgelegten Rückenlehne in einem Winkel von 180° zu der durch die zweite Rahmenkomponente 29 festgelegten Sitzfläche befindet, so daß eine Liegefläche für ein in der Kinderaufnahmevorrichtung 5 aufgenommenes Kind gebildet wird.

Abschließend kann dann die dritte Rahmenkomponente über die dritte Drehvorrichtung 65 relativ zu der zweiten Rahmenkomponente 29 verstellt werden, um die Korbkonfiguration, wie sie in Figur 6d dargestellt ist zu komplettieren.

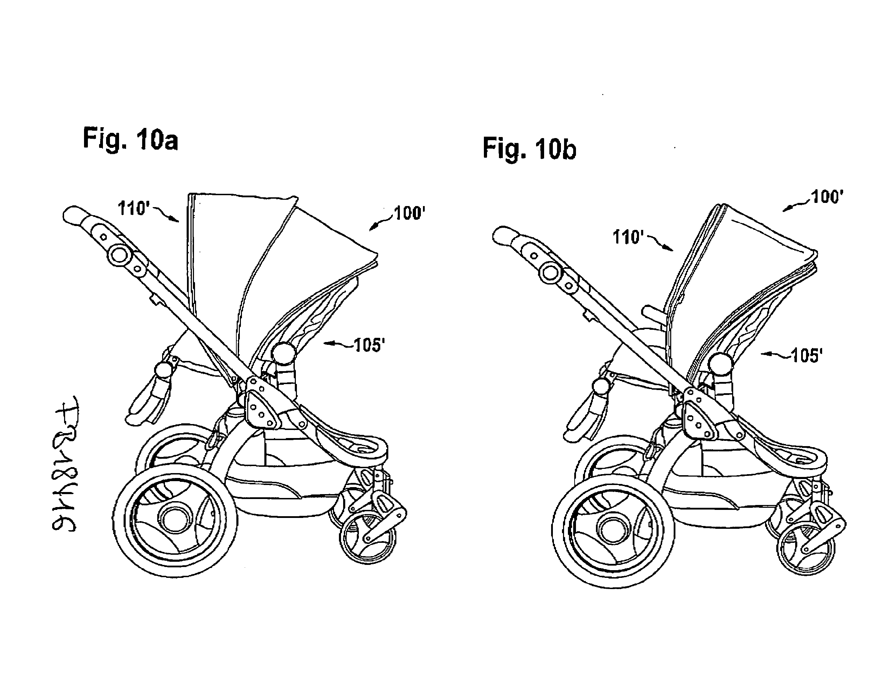

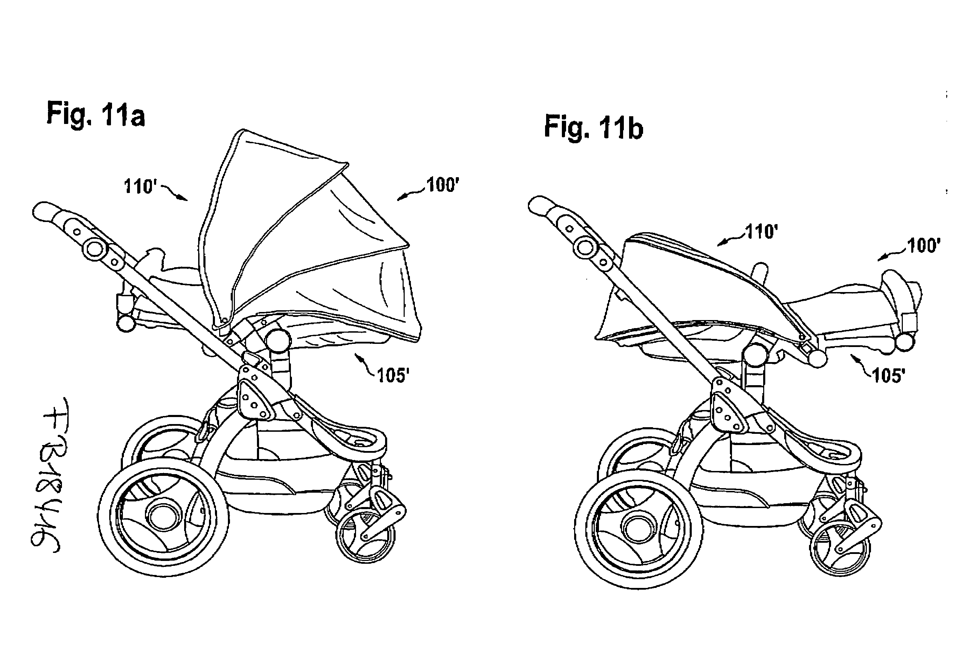

Somit ermöglicht die Kinderaufnahmevorrichtung 5 eine maximale Flexibilität um einen höchstmöglichen Komfort für ein in der Kinderaufnahmevorrichtung aufgenommenes Kind bzw. einen Benutzer bereitzustellen. Die erste Drehvorrichtung 61 ermöglicht eine komplette Verkippung der Kinderaufnahmevorrichtung 5, insbesondere wenn sich diese in einer in den Figuren 6a bzw. 10a und 10b dargestellten Sitzkonfiguration befindet, aber auch wenn sich diese in der in den Figuren 6d bzw. 11a und 11b dargestellten Korb- bzw. Wannenkonfiguration befindet. Des weiteren ermöglicht es die zweite Drehvorrichtung 63, daß, insbesondere wenn sich die Kinderaufnahmevorrichtung 5 in der Sitzkonfiguration befindet, ein Winkel zwischen einer Rückenlehne und einer Sitzfläche der Kinderaufnahmevorrichtung 5 einstellbar ist. Schließlich ermöglicht es die dritte Drehvorrichtung 65, daß eine Fußstütze in ihrer Position beliebig angepaßt werden kann und gleichzeitig als Abschlußwand für die Kinderaufnahmevorrichtung 5 in einer Korbkonfiguration dient. Wie insbesondere den Figuren 6d und 11b zu entnehmen ist, kann der Bügel 35 der Kinderaufnabmevorrichtung 5 in der Korbfiguration derselben als Tragegriff eingesetzt werden, insbesondere um nach einem Entriegeln der Verbindungsvorrichtung 7 die Kinderaufnahmevorrichtung 5 von dem Rahmen 3 abzuheben.

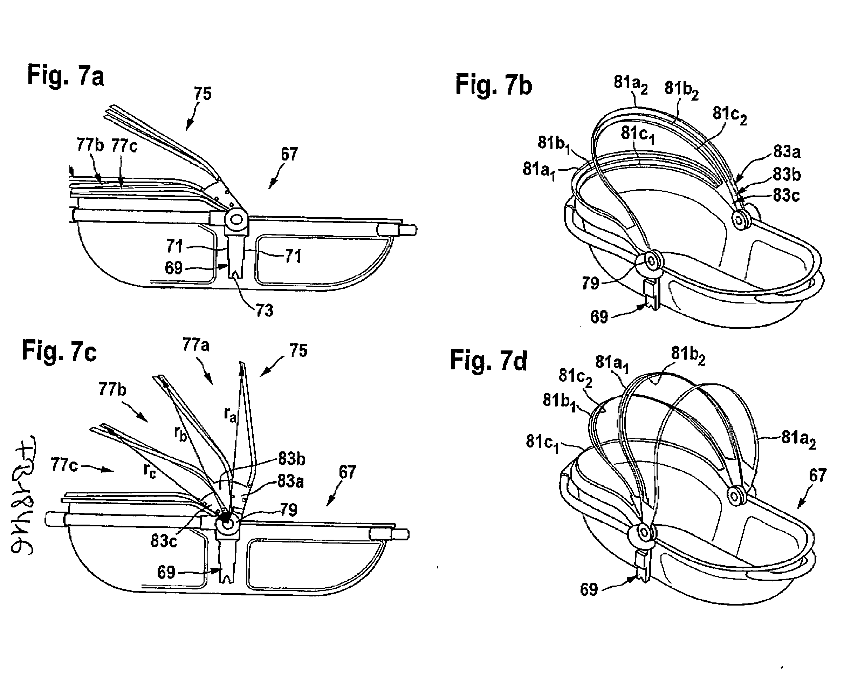

Wie insbesondere der Figur 2 zu entnehmen ist, ist in einer vorteilhaften Ausführungsform des Kindeswagens 1 vorgesehen, daß dieser ein Verdeck 39 aufweist. Im folgenden wird nunmehr detaillierter der Aufbau eines solchen erfindungsgemäßen Verdecks anhand der Figuren 7a bis 12 beschrieben. In den Figuren 7a bis 7d ist eine weitere Ausführungsform einer Personenaufnahmevorrichtung in Form einer Kinderaufnahmevorrichtung bzw. Wanne 67 dargestellt. Wie insbesondere Figur 7a zu entnehmen ist, weist die Wanne 67 eine zu der Verbindungsvorrichtung 7 kompatible Verbindungsvorrichtung 69 auf, so daß die Wanne 67 an dem Rahmen 3 des Kinderwagens 1 anstelle der Kinderaufnahmevorrichtung 5 befestigt werden kann- Insbesondere weist die Verbindungsvorrichtung 69 Betätigungseinrichtungen in Form von Druckknöpfen 71, über die ein Rasthaken 73 bewegbar ist, auf.

Wie den Figuren 7a bis 7d zu entnehmen ist, ist an der Wanne 67 ein Verdeck 75 angeordnet, insbesondere lösbar an der Wanne 67 befestigt. Das Verdeck 75 weist, wie insbesondere Figur 7b zu entnehmen ist, Verdeckelemente 77a, 77b, 77c auf. Die Verdeckelemente 77a, 77b, 77c sind um eine gemeinsame Achse 79 drehbar gelagert. Ferner weisen diese, wie den Figuren 7a und 7c zu entnehmen ist, in einer Ebene, die im wesentlichen senkrecht zu der Drehachse verläuft, eine im wesentlichen keilförmige Umfangsform auf. Die Verdeckelemente 77a, 77b, 77c sind hingegen in einer Ebene, die die Drehachse 79 beinhaltet bzw. zu dieser im wesentlichen parallel verläuft, im wesentlichen eine bogenförmige Umfangsform auf, wobei die Radien rₐ, r_{b}, r_{c} der einzelnen Bögen, wie Figur 7c zu entnehmen ist, unterschiedlich groß sind. So weißt das Verdeckelement 77a den größten Bogenradius rₐ auf, während das Verdeckelement 77b den zweitgrößten Bogenradius r_{b} aufweist und das Verdeckelement 77c den kleinsten Bogenradius r_{c} aufweist. Dies ermöglicht es, daß die Verdeckelemente 77a, 77b, 77c in der in den Figuren 7a und 7b dargestellten, gefalteten Konfiguration des Verdecks 75 teleskopartig bzw. fächerartig ineinander gefahren werden können. Mit anderen Worten überspannen die Verdeckelemente 77a, 77b, 77c in der in Figuren 7a und 7b dargestellten gefalteten Konfiguration des Verdecks 75 im wesentlichen das gleiche Bogensegment um die Drehachse 79, jedoch in unterschiedlichen Abständen zu der Drehachse 79.

Um das Verdeck 75 aus der gefalteten Konfiguration in die in den Figuren 7c und 7d dargestellte entfaltete Position zu überführen, wird das erste Verdeckelement 77a aus der in den Figuren 7a und 7b dargestellten Konfiguration um die Achse 79 gedreht. Wurde das erste Verdeckelement 77a um einen vorbestimmten Winkel gedreht, so gelangt das erste Verdeckelement 77a über eine nicht dargestellte Mitnahmevorrichtung in Verbindung mit dem zweiten Verdeckelement 77b, so daß ein weiteres Drehen des ersten Verdeckelements 77a eine Mitnahme des zweiten Verdeckelements 77b bewirkt. Sind die beiden Verdeckelemente 77a und 77b um einen weiteren vorbestimmten Winkel um die Drehachse 79 gedreht worden, so gelangt das zweite Verdeckelement über eine ebenfalls nicht dargestellte Mitnahmevorrichtung in mechanische Verbindung mit dem dritten Verdeckelement 77c bzw. das erste Verdeckelement 77a über eine nicht dargestellte Mitnahmevorrichtung in mechanischen Kontakt mit dem Verdeckelement 77c. Das Verdeck 75 befindet sich dann insbesondere im entfalteten Zustand, wie es in den Figuren 7c und 7d dargestellt ist. Bei dem in den Figuren 7a bis 7d dargestellten Verdeck ist vorgesehen, daß jedes Verdeckelement 77a, 77b, 77c zwei Verdeckbügel 81a₁, 81a₂ bzw. 81b₁, 81b₂ bzw. 81c₁, 81c₂ aufweist. Dabei sind die Verdeckbügel 81a₁ und 81a₂ an einer Elementbasis 83a des Verdeckelements 77a befestigt bzw. einstückig mit dieser ausgebildet. Entsprechend sind die Verdeckbügel 81b₁, 81b₂ bzw. 81c₁, 81c₂ mit Elementbasen 83b bzw. 83c der Verdeckelemente 77b, 77c verbunden bzw. einstückig mit diesen ausgebildet. Insbesondere kann vorgesehen sein, daß die zuvor erwähnten Mitnahmeelemente im Bereich der Elementbasen 83a, 83b, 83c der Verdeckelemente 77a, 77b, 77c angeordnet sind. Die Verdeckelemente 77a, 77b, 77c werden insbesondere mit einem in den Figuren 7a bis 7d nicht dargestellten Verdeckstoff bespannt.

Das Verdeck 75 weist den Vorteil auf, daß die Verdeckelemente auch in dem in den Figuren 7a und 7b dargestellten, gefalteten Zustand des Verdecks 75 voneinander beabstandet sind. Insbesondere wenn das Verdeck beispielsweise in einem feuchten Zustand in die in den Figuren 7a und 7b dargestellte Konfiguration überführt wird, so ist sichergestellt, daß die Oberfläche der einzelnen Verdeckelemente 77a, 77b, 77c, insbesondere der Verdeckstoff, ausreichend belüftet werden kann, insbesondere die Verdeckstoffe der einzelnen Verdeckelemente 77a, 77b, 77c nicht miteinander in Kontakt stehen, so daß eine schnelle Trocknung der Verdeckelemente ermöglicht wird. Darüber hinaus weist das Verdeck 75 auch in der gefalteten Konfiguration eine große Kompaktheit auf.

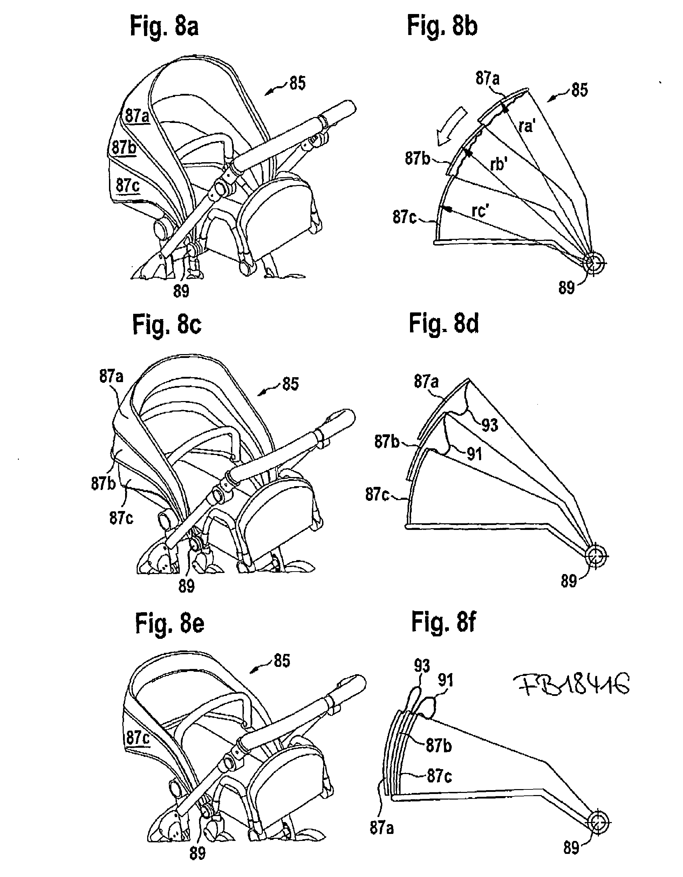

In den Figuren 8a bis 8f ist eine weitere Ausführungsform eines erfindungsgemäßen Verdecks 85, welches insbesondere an dem Kinderwagen 1 befestigt werden kann, dargestellt. Das Verdeck 85 weist insbesondere gemäß den Figuren 8a und 8b Verdeckelemente 87a, 87b und 87c auf. Im Gegensatz zu dem Verdeck 75 umfassen die Verdeckelemente 87a, 87b, 87c jedoch keine Verdeckbügel, die mit einem Verdeckstoff bespannt sind, sondern sind im wesentlichen als einstückige Elemente ausgebildet. Ähnlich den Verdeckelementen 77a, 77b, 77c sind die Verdeckelemente 87a, 87b, 87c im wesentlichen bogenförmig zwischen Befestigungspunkten an einer Achse 89, um die die Verdeckelemente 87a, 87b, 87c drehbar sind, angeordnet, wobei die Radien rₐ', r_{b}', r_{c}' unterschiedlich groß sind, insbesondere gilt rₐ' > r_{b}' > r_{c}'. Dadurch wird erreicht, daß die Verdeckelemente 87a, 87b, 87c, wie insbesondere den Figuren 8b, 8d, 8f zu entnehmen ist, teleskopartig bzw. fächerartig ineinander gefahren werden können, wobei, wie insbesondere Figur 8f zu entnehmen ist, im zusammengefalteten Zustand des Verdecks 85, die Verdeckelemente 87a, 87b, 87c voneinander beabstandet bleiben, um insbesondere eine ausreichende Durchlüftung zwischen den Verdeckelementen 87a, 87b, 87c zu ermöglichen. Im Gegensatz zu dem Verdeck 75 sind entsprechende Mitnahmevorrichtungen, durch die die jeweiligen Verdeckelemente bei einem Aufklappen des Verdecks 85 nach einem vorherbestimmten Bewegungsumfang mechanisch miteinander gekoppelt sind, nicht im Bereich der Drehachse 89 sondern von der Drehachse 89 entfernt angeordnet. Bei den Mitnahmevorrichtungen 91, 93 kann es sich insbesondere um ein Innenfutter des Verdecks 85 handeln.

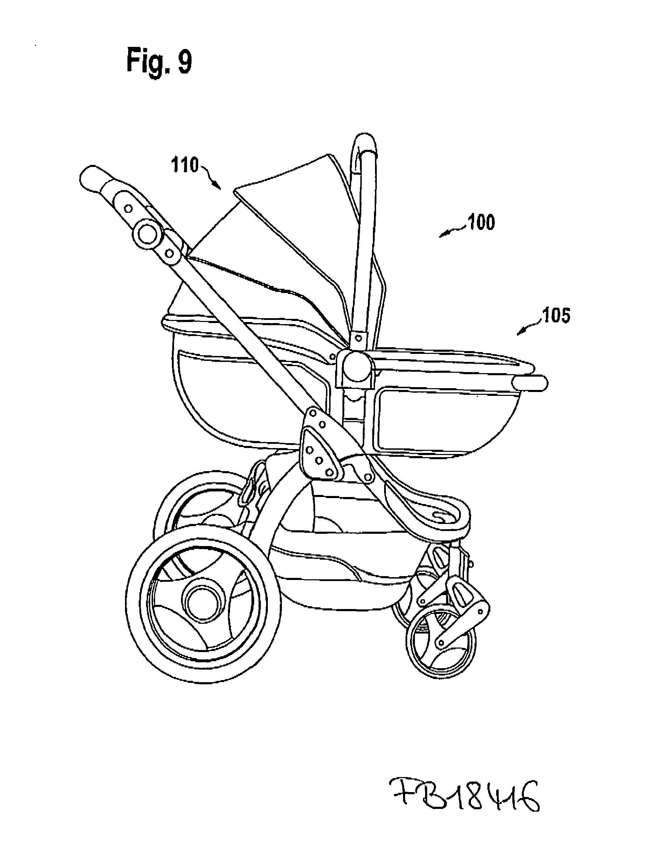

In den Figuren 9 bis 11b sind Kinderwagen 100 und 100' mit jeweiligen Kinderaufnahmevorrichtungen 105, 105' in unterschiedlichen Konfigurationen dargestellt. Figur zeigt einen Kinderwagen 100, welcher eine Kinderaufnahmevorrichtung in Form einer Wanne 105 aufweist, an welcher ein Verdeck 110, welches sich im entfalteten Zustand befindet, angeordnet ist. In den Figuren 10a bis 11b ist ein Kinderwagen 100' dargestellt, welcher eine transformierbare Kinderaufnahmevorrichtung 105', insbesondere ähnlich der Kinderaufnahmevorrichtung 5 aufweist, dargestellt. In den Figuren 10a und 10b befindet sich die Kinderaufnahmevorrichtung 105' in einer Sitzkonfiguration, wobei ein an der Kinderaufnahmevorrichtung 105' angeordnetes Verdeck 110' sich im teilweise entfalteten Zustand befindet, während das Verdeck 110' in Figur 10b zusammengefaltet ist. Im Gegensatz dazu befindet sich die Kinderaufnahmevorrichtung 105' in den Figuren 11a und 11b in einer Wannen- bzw. Korbkonfiguration, wobei in Figur 11a das Verdeck 110' entfaltet ist, während es in Figur 11b zusammengefaltet ist.

Insbesondere hinsichtlich der Konfiguration eines Verdecks wird darauf hingewiesen, daß die Verdecke gemäß der Erfindung nicht auf einer Konfiguration beschränkt sind, bei denen einzelne Verdeckelemente um eine gemeinsame Drehachse schwenkbar gelagert sind. So kann auch vorgesehen sein, daß die Verdeckelemente nicht in Form von Kugel-, Ellipsen- oder Scheibensegmenten ausgebildet sind, sondern die Form von Rohrsegmenten aufweisen können, die entlang einer longitudinalen Achse verschiebbar sind, wobei die Verdecksegmente teleskopartig ineinander schiebbar sind.

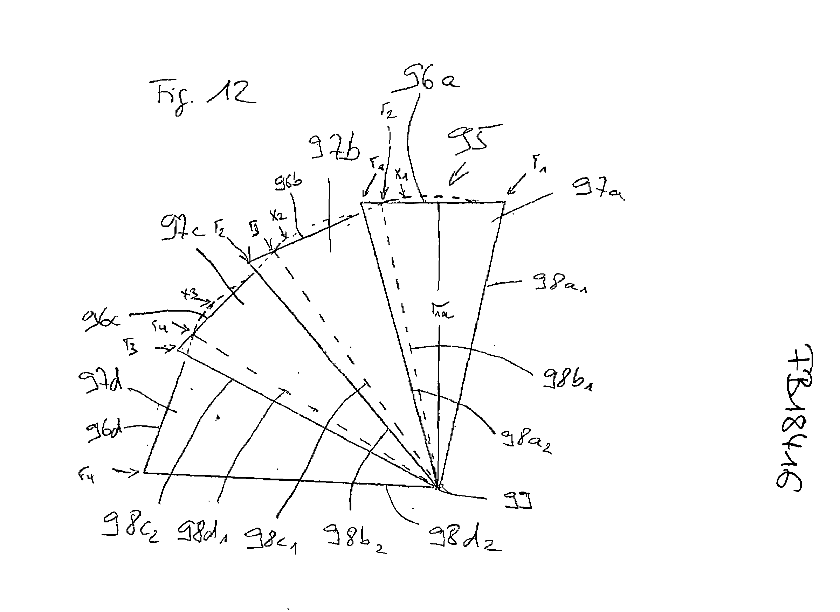

Figur 12 zeigt in schematischer Seitenansicht ein erfindungsgemäßes Verdeck 95, umfassend vier Verdeckelemente 97a, 97b, 97c und 97d mit jeweils einer vorderen und einer hinteren Rand- bzw. Rahmenbegrenzung, insbesondere in Form von Verdeckbügeln, 98a₁, 98a₂, 98b₁, 98b₂, 98c₁, 98c₂ und 98d₁, 98d₂. Die Verdeckbügel stellen folglich für jedes einzelne Verdeckelement die vordere und hintere Rand- bzw. Rahmenbegrenzung dar. Die vordere und hintere Rahmenbegrenzung des ersten Verdeckelements 97a haben in ihrer Maximalausdehnung in etwa den gleichen radialen Abstand r₁ zur Drehachse 99. Das gleiche trifft auf die vordere und hintere Rahmenbegrenzung von zweitem, drittem bzw. viertem Verdeckelement zu, die radiale Abstände r₂, r₃ bzw. r₄ aufweisen. Zwischen diesen vorderen und hinteren Rahmenbegrenzungen der Verdeckelemente sind Verdeckflächen 96a, 96b, 96c bzw. 96d angebracht bzw. aufgespannt. Die Hauptverdeckflächen sind dabei anders als die Seitenverdeckflächen bevorzugt in dem Bereich, der der Drehachse 99 gegenüberliegt, angebracht und damit möglichst weit von dieser beabstandet. So ist beispielsweise die Hauptverdeckfläche 96a zumindest bereichsweise geringer beabstandet zur Drehachse 99 als der Abstand r₁ von vorderer und hinterer Rahmenbegrenzung 98a₁ und 98a₂ des ersten Verdeckelements 97a. In der in Figur 12 schematisch wiedergegebenen Seitenansicht einer Ausführungsform eines erfindungsgemäßen Verdecks 95 verlaufen die Verdeckflächen zwischen den jeweiligen vorderen und hinteren Rahmenbegrenzungen im wesentlichen geradlinig. Selbstverständlich können die Verdeckfläche oder beispielsweise auch nur die Hauptverdeckflächen einen gewölbten Verlauf haben, vorzugsweise in Richtung der Drehachse gewölbt. Wie beispielsweise bei Kinderwagenverdecken häufig vorzufinden, kann diese Verdeckfläche aus einem federelastischen Material, beispielsweise aus gewebtem Textil, gefertigt sein. Figur 12 zeigt ein erfindungsgemäßes Verdeck 95 bestehend aus insgesamt vier Verdeckelementen 97a - d im ausgefahrenen Zustand. D.h. das erste Verdeckelement 97a steht bei gattungsgemäßem Gebrauch des Verdecks 95 im wesentlichen aufrecht. Im zusammengeklappten Zustand liegen die einzelnen Verdeckelemente 97a - d jeweils aufgrund der abnehmenden radialen Abstände von vorderer und hinterer Rahmenbegrenzung zur Drehachse (r₁ > r₂ > r₃ > r₄) ineinander verschachtelt vor. Wird nun das erste Verdeckelement 97a in die in Figur 12 wiedergegebene aufrechte Position gebracht, erfährt die vordere Rahmenbegrenzung 98b₁ des zweiten Verdeckelements 97b einen Widerstand, indem sie zunächst einmal gegen die Unterseite der Verdeckfläche 96a stößt. Wenn diese z.B. federelastisch ausgebildet ist, gibt sie bei entsprechender Kraftbeaufschlagung nach, wodurch die obere Begrenzung bzw. das obere Ende der vorderen Rahmenbegrenzung 98b₁ des zweiten Verdeckelements 97b in Wechselwirkung mit der Verdeckfläche 96a gegen einen Widerstand entlang der gestrichelt ausgeführten Linie, die abschnittsweise oberhalb der Verdeckfläche im Grundzustand des ersten Verdeckelements 97a liegt, geführt wird. Ohne externe Kraftbeaufschlagung kann sodann das erste Verdeckelement 97a nicht mehr in die ursprünglich zusammengeklappte Position zurückfallen. Wie der vorangehenden Schilderung sowie auch unmittelbar der Fig. 12 zu entnehmen ist, hat die Verdeckfläche 96a des ersten Verdeckelements 97a vorzugsweise zumindest bereichsweise einen radialen Abstand r₁ₐ aufzuweisen, der kleiner ist als der radiale Abstand r₂ der Rahmenbegrenzungen des zweiten Verdeckelements 97b. In gleicher Weise verhalten sich vorzugsweise auch die radialen Abmessungen von zweitem und drittem sowie von drittem und viertem Verdeckelement zueinander.

Für jeweils zwei benachbarte Verdeckelemente, beispielsweise erstes und zweites Verdeckelement, sind die maximalen radialen Abstände von hinterer und vorderer Rahmenbegrenzung, beispielsweise des zweiten Verdeckelements, vorzugsweise so gewählt, daß allein durch die Wechselwirkung mit dem federelastischen Material der Verdeckfläche, beispielsweise des ersten Verdeckelements, eine Fixierung in der ausgefahrenen Position gelingt. So können beispielsweise die vorderen Rahmenbegrenzungen von zweitem, drittem und/oder viertem Verdeckelement 97b-d bis zu einer Position gegen den Widerstand der Verdeckfläche in Richtung auf die hintere Rabmenbegrenzung von erstem, zweitem bzw. drittem Verdeckelement verschoben werden, bei der noch stets sichergestellt ist, daß das Material der Verdeckfläche durch die starren vorderen Rahmenbegrenzungen nach außen gewölbt und diese dadurch eingeklemmt bzw. lagefixiert werden. Eine solche ebenfalls geeignete Position ist in Fig. 12 mit den Positionsmarkierungen x₁, x₂ und x₃ für das erste, zweite bzw. dritte Verdeckelement angedeutet.

Zusätzlich oder alternativ kann z.B. das erste Verdeckelement 97a durch eine Verbindung (nicht abgebildet) mit dem zweiten Verdeckelement 97b, beispielsweise durch eine Mitnahmevorrichtung, wie vorangehend für Fig. 8 geschildert, gegen ein Vornüberklappen in Aufklapprichtung gesichert sein. In gleicher Weise können selbstverständlich das zweite und das dritte bzw. das dritte und das vierte Verdeckelement gegen ein weiteres Vornüberklappen über die dargestellte Position hinaus durch geeignete Verbindungsvorrichtungen gesichert sein.

Mit der insbesondere in Fig. 12 dargestellten Ausführungsform eines erfindungsgemäßen Verdecks gelingt auf einer Weise eine Lagefixierung im ausgefahrenen bzw. ausgeklappten Zustand, ohne daß es zusätzlicher Hilfsmittel oder Arretierungsvorrichtungen bedarf. Dabei können die einzelnen Verdeckelemente auf einfache Weise sowohl gegen ein Vornüberfallen bzw. -klappen als auch gegen ein Zurückfallen in die verschachtelte, zusammengefahrene Position gesichert werden. Konstruktiv aufwendige und reparaturanfällige Bauteile können auf diese Weise vermieden und gleichwohl ein optisch ansprechendes Design ermöglicht werden. Gleichzeitig wird ein sicherer Sonnen-, Regen- und Witterungsschutz gewährleistet.

Die in der vorgehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichen

- 1: Kinderwagen
- 3: Rahmen
- 5: Kinderaufnahmevorrichtung
- 7: Verbindungsvorrichtung
- 9: Schubstange
- 11: Handgriff
- 13: Faltmechanismus
- 15: Auslösehebel
- 17: Hinderradträger
- 19: Hinterrad
- 21: Vorderradträger
- 23: Vorderrad
- 25: Rahmen
- 27: erste Rahmenkomponente
- 29: zweite Rahmenkomponente
- 31: dritte Rahmenkomponente
- 33: Verbindungseinrichtung
- 35: Bügel
- 37: Stoffbezug
- 39: Verdeck
- 41: Anschlußelement
- 43: Druckknopf
- 45: Verriegelungseinrichtung
- 47: Rasthaken
- 49: Achse
- 51: Federeinrichtung
- 53: Stift
- 55: Schraubverbindung
- 57: Schaft
- 59: Aussparung
- 61: erste Drehvorrichtung
- 63: zweite Drehvorrichtung
- 65: dritte Drehvorrichtung
- 67: Wanne
- 69: Verbindungsvorrichtung
- 71: Druckknopf
- 73: Rasthaken
- 75: Verdeck
- 77a, 77b, 77c: Verdeckelement
- 79: Achse
- 81a₁, 81a₂, 81b₁, 81b₂, 81c₁, 81c₂: Verdeckbügel
- 83a, 83b, 83c,: Elementbasis
- 85: Verdeck
- 87a, 87b, 87c: Verdeckelement
- 89: Achse
- 91: Mitnahmevorrichtung
- 93: Mitnahmevorrichtung
- 95: Verdeck
- 96a, 96b, 96c, 96d: Verdeckfläche
- 97a, 97b, 97c, 97d: Verdeckelement
- 98a₁, 98a₂, 98b₁, 98b₂, 98c₁, 98c₂, 98d₁, 98d₂: vordere bzw. hintere Rand- bzw. Rahmbegrenzung/Verdeckbügel
- 99: Drehachse
- 100,100': Kinderwagen
- 105, 105': Kinderauinahmevorrichtung
- 110, 110': Verdeck

- rₐ, r_{b}, r_{c}, rₐ', r_{b}', r_{c}': Radius
- r₁, r₂, r₃, r₄: Radius
- r₁ₐ: Abstand zur Hauptverdeckfläche
- x₁, x₂, x₃: Auswölbungspunkt in Hauptverdeckfläche

- F: Kraft

## Patentansprüche

1. Verdeck (75, 85, 105, 105'), insbesondere für einen Personentransportwagen (1, 100, 100') zur zumindest teilweisen Überspannung zumindest einer Öffnung zumindest einer Personenaufnahmevorrichtung (5, 105, 105'), umfassend zumindest zwei relativ zueinander und zumindest partiell in- bzw. übereinander um zumindest eine gemeinsame Drehachse (79, 89) bewegbare erste und zweite Verdeckelemente (77a, 77b, 77c, 87a, 87b, 87c), umfassend eine vordere Randbegrenzung, insbesondere vorderen Verdeckbügel, und eine beabstandete hintere Randbegrenzung, insbesondere hinteren Verdeckbügel, die beide mit der Drehachse (79, 89) verbunden oder verbindbar sind, mit einer Hauptverdeckfläche, aufgespannt zwischen der vorderen und der hinteren Randbegrenzung, und gegebenenfalls sich gegenüberliegenden ersten und zweiten Seitenverdeckflächen, die sich von der Hauptverdeckfläche jeweils in Richtung, insbesondere bis zu, der Drehachse erstrecken, wobei die zwischen der vorderen und der hinteren Randbegrenzung des ersten Verdeckelements aufgespannte bzw. vorliegende Hauptverdeckfläche zumindest bereichsweise einen geringeren radialen Abstand zur Drehachse (79, 89) aufweist als die maximale radiale Entfernung der vorderen Randbegrenzung des zweiten Verdeckelements (77a, 77b, 77c, 87a, 87b, 87c), so daß das zweite Verdeckelement (77a, 77b, 77c, 87a, 87b, 87c) durch die hintere Randbegrenzung des ersten Verdeckelements (77a, 77b, 77c, 87a, 87b, 87c) einschiebbar ist.

2. Verdeck (75, 85, 105, 105'), insbesondere für einen Personentransportwagen (1, 100, 100') zur zumindest teilweisen Überspannung zumindest einer Öffnung zumindest einer Personenaufnahmevorrichtung (5, 105, 105'), wobei das Verdeck (75, 85, 105, 105') zumindest zwei relativ zueinander um zumindest eine gemeinsame Drehachse (79, 89) bewegbare Verdeckelemente (77a, 77b, 77c, 87a, 87b, 87c) umfaßt und die Verdeckelemente (77a, 77b, 77c, 87a, 87b, 87c) in einer die Drehachse (79, 89) beinhaltenden und/oder zu dieser im wesentlichen parallel verlaufenden, ersten Ebene zumindest bereichsweise eine im wesentlichen bogenförmige Umfangsform aufweisen, insbesondere nach Anspruch 1,
**dadurch gekennzeichnet, daß**
die Verdeckelemente (77a, 77b, 77c, 87a, 87b, 87c) in einer zweiten, im wesentlichen senkrecht zu der Drehachse (79, 89) verlaufenden, Ebene zumindest bereichsweise eine im wesentlichen kreissegmentförmige und/oder keilförmige Umfangsform aufweisen und sich die Abmessungen zumindest eines ersten Verdeckelementes (77a, 87a) und zumindest eines zweiten Verdeckelementes (77b, 87b) in der ersten Ebene so unterscheiden, daß das erste (77a, 87a) und das zweite Verdeckelement (77b, 87b) durch eine Drehung um die Drehachse (79,89), insbesondere teleskopartig, ineinander schiebbar sind.

3. Verdeck nach Anspruch 1 oder 2, **dadurch gekennzeichnet, daß**
das erste (77a, 87a) und/oder das zweite Verdeckelement (77b, 87b) in der ersten Ebene zumindest eine zumindest bereichsweise kreisförmige, ellipsenförmige, parabelförmige und/oder mehreckförmige, wie dreieckförmige und/oder rechteckförmige, Umfangsform aufweist bzw. aufweisen.

4. Verdeck nach einem der vorangehenden Ansprüche, **dadurch gekennzeichnet, daß** zumindest eine einen Abstand zwischen der Drehachse (79, 89) und dem Umfang des ersten Verdeckelementes (77a, 87a) in der ersten Ebene bezeichnende geometrische erste Abmessung (rₐ, rₐ') größer als eine entsprechende einen Abstand zwischen der Drehachse (79, 89) und dem Umfang des zweiten Verdeckelementes (77b, 87b) in der ersten Ebene bezeichnende zweite geometrische Abmessung (r_{b}, r_{b}') ist und/oder zumindest ein Radius (rₐ, rₐ') der Umfangsform des ersten Verdeckelementes (77a, 87a) in der ersten Ebene größer als zumindest ein Radius (r_{b}, r_{b}') der Umfangsform des zweiten Verdeckelementes (77b, 87b) in der ersten Ebene ist.

5. Verdeck nach einem der vorangehenden Ansprüche, **gekennzeichnet durch** zumindest eine Mitnahmevorrichtung (93), wobei das erste Verdeckelement (87a) und zweite Verdeckelement (87b) mittels der Mitnahmevorrichtung (93) mitnahmesicher verbindbar oder verbunden sind, insbesondere das erste Verdeckelement (87a) oder das zweite Verdeckelement (87b) nach einer Drehung des zweiten Verdeckelementes (87b) bzw. ersten Verdeckelementes (87a), vorzugsweise aus einer gefalteten Position des Verdecks (85), in der das erste (87a) und zweite (87b) Verdeckelement zumindest bereichsweise ineinander geschoben sind, um zumindest einen vorbestimmten Winkel drehmitnahmesicher mit dem zweiten (87b) bzw. ersten Verdeckelement (87a) verbindbar oder verbunden ist, insbesondere das erste Verdeckelement (87a) oder das zweite Verdeckelement (87b) bei einer weiteren Drehung des zweiten Verdeckelementes (87b) bzw. des ersten Verdeckelementes (87a) mitdrehbar ist.

6. Verdeck nach einem der vorangehenden Ansprüche, **dadurch gekennzeichnet, daß**
das erste Verdeckelement (77a) und/oder das zweite Verdeckelement (77b) zumindest einen Verdeckbügel (81a₁, 81a₂, 81b₁, 81b₂) umfaßt bzw. umfassen, wobei der Verdeckbügel (81a₁, 81a_{z}, 81b₁, 81b₂), insbesondere über zumindest eine Elementbasis (83a, 83b), mit der Drehachse (79) des ersten (77a) und/oder zweiten Verdeckelementes (77b) verbindbar oder verbunden ist, vorzugsweise die Elementbasis (83a, 83b) und der Verdeckbügel (81a₁, 81a₂, 81b₁, 81b₂) einstückig ausgebildet sind und/oder, insbesondere lösbar, miteinander verbindbar oder verbunden sind.

7. Verdeck nach Anspruch 6, **dadurch gekennzeichnet, daß**
an dem Verdeckbügel (81a₁, 81a₂, 81b₁, 81b₂) zumindest ein Abschirmelement, wie zumindest eine Haube, zumindest eine, insbesondere textile, vorzugsweise mehrlagige, Bespannung und/oder Lamelle, angeordnet oder anordbar ist, wobei das erste (77a) und/oder das zweite Verdeckelement (77b) vorzugsweise jeweils zumindest zwei Verdeckbügel (81a₁, 81a₂, 81b₁, 81b₂) zur Anordnung des Abschirmnelementes, insbesondere der Bespannung, umfaßt bzw. umfassen.

8. Verdeck nach einem der Ansprüche 5 bis 7, **dadurch gekennzeichnet, daß**
die Mitnahmevorrichtung (91, 93) mit zumindest einem Verdeckbügel, zumindest einer Elementbasis und/oder zumindest einem Abschirmelement (87a, 87b) zumindest indirekt verbindbar oder verbunden ist und/oder die Mitnahmevorrichtung (91, 93) zumindest einen Teil zumindest einer Innenbespannung des Verdecks (85) und/oder zumindest eine Federeinrichtung umfaßt.

9. Verdeck nach einem der vorangehenden Ansprüche, **dadurch gekennzeichnet, daß** zumindest ein relativer Winkel zwischen dem ersten Verdeckelement (77a, 87a) und/oder dem zweiten Verdeckelement (77b, 87b) kontinuierlich und/oder in diskreten Schritten veränderbar und/oder einstellbar ist, insbesondere das erste Verdeckelement (77a, 87a) und/oder das zweite Verdeckelement (77b, 87b) jeweils in zumindest einer Winkelposition um die Drehachse (79, 89) fixierbar ist bzw. sind, wobei vorzugsweise eine Vielzahl von diskreten und/oder kontinuierlichen Winkelpositionen vorgesehen ist.

10. Verdeck nach einem der vorangehenden Ansprüche, **dadurch gekennzeichnet, daß** das erste und/oder das zweite Verdeckelement, zumindest eine Elementbasis, zumindest ein Abschirmelement, zumindest ein Verdeckbügel und/oder zumindest eine Mitnahmevorrichtung zumindest bereichsweise zumindest ein Kunststoffmaterial, zumindest ein Verbundmaterial, insbesondere Glasfaserverbundmaterial und/oder zumindest ein Metallmaterial, wie Aluminium, Stahl und/oder zumindest eine Legierung, umfaßt bzw. umfassen.

11. Verdeck nach einem der vorangehenden Ansprüche, **dadurch gekennzeichnet, daß**
das zweite Verdeckelement (77a, 77b, 77c, 87a, 87b, 87c), insbesondere die vordere Randbegrenzung des zweiten Verdeckelements, gegen einen durch Wechselwirkung des zweiten Verdeckelements, insbesondere der vorderen Randbegrenzung des zweiten Verdeckelements mit der Hauptverdeckfläche und/oder der ersten und/oder zweiten Seitenverdeckfläche des ersten Verdeckelements hervorgerufenen Widerstand um die Drehachse reversibel verschwenkbar und lagefixierbar oder lagefixiert ist.

12. Verdeck nach Anspruch 11, **dadurch gekennzeichnet, daß**
der radiale Abstand der Hauptverdeckfläche des ersten Verdeckelements zu der Drehachse (97, 98) zumindest bereichsweise geringer ist als die maximale radiale Entfernung der vorderen Randbegrenzung des zweiten Verdeckelements zu der Drehachse.

13. Verdeck nach einem der vorangehenden Ansprüche, **dadurch gekennzeichnet, daß** die vordere und/oder hintere Randbegrenzung von erstem und/oder zweitem Verdeckelement jeweils Verdeckbügel (81a₁, 81a₂, 81b₁, 81b₂; 98a₁, 98a₂, 98b₁, 98b₂, 98c₁, 98c₂, 98d₁, 98d₂) darstellen.

14. Verdeck nach Anspruch 13, **dadurch gekennzeichnet, daß** die Verdeckbügel von erstem und zweitem Verdeckelement im Bereich der Drehachse gegeneinander anliegen und gegen einen Widerstand gegeneinander verschwenkbar sind, so daß gegeneinander verschwenkte Verdeckbügel ohne externe Krafteinwirkung lagefixiert sind.

15. Personentransportwagen (1, 100, 100'), umfassend zumindest ein Verdeck (75, 85, 95, 110, 110') nach einem der Ansprüche 1 bis 14, vorzugsweise reversibel lösbar mit dem Personentransportwagen (1,100,100') verbindbar oder verbunden.

16. Personentransportwagen nach Anspruch 15, **gekennzeichnet durch** zumindest eine Personenaufnahmevorrichtung, wobei die Personenaufnahmevorrichtung (5, 105') zumindest einen Rahmen (25) umfaßt und von einer Sitzkonfiguration, in der die Person in einer im wesentlichen sitzenden Position aufnehmbar ist, in eine Korbkonfiguration, in der die Person im wesentliche liegend aufnehmbar ist, und/oder umgekehrt überführbar ist, wobei der Neigungswinkel zumindest einer in der Sitzkonfiguration zumindest eine Rückenlehne festelegenden ersten Rahmenkomponente (27), insbesondere relativ zu zumindest einem Hauptrahmen (3) des Personentransportwagens (1) über zumindest eine erste Drehvorrichtung (61) einstellbar ist und der Rahmen (25) zumindest eine in der Sitzkonfiguration zumindest eine Sitzfläche festlegende zweite Rahmenkomponente (29) umfaßt, wobei zumindest ein Winkel zwischen der ersten (27) und der zweiten Rahmenkomponente (29) unabhängig von der ersten Drehvorrichtung (61) über eine die erste (27) und die zweite Rahmenkomponente (29) verbindende zweite Drehvorrichtung (63) einstellbar ist.

17. Personentransportwagen nach Anspruch 15 oder 16, **dadurch gekennzeichnet, daß** der Rahmen (25) zumindest eine, vorzugsweise in der Sitzkonfiguration eine Fußstütze festlegende, dritte Rahmenkomponente (31) aufweist, wobei die zweite (29) und dritte Rahmenkomponente (31) über zumindest eine dritte Drehvorrichtung (65) miteinander verbunden sind, insbesondere zumindest ein Winkel zwischen der zweiten (29) und dritten Rahmenkomponente (31) einstellbar ist.

18. Personentransportwagen nach einem der Ansprüche 14 bis 17, **dadurch gekennzeichnet, daß**
das Verdeck (75, 85, 105') mit der ersten (27), der zweiten (29) und/oder der dritten Rahmenkomponente (31) und/oder der ersten (61), zweiten (63) und/oder dritten Drehvorrichtung (65) verbunden oder verbindbar ist.

19. Personentransportwagen nach einem der Ansprüche 14 bis 18 in Form eines Kinderwagens (1), vorzugsweise in Form zumindest eines Sportwagens, zumindest eines Buggys, zumindest eines Kinderwagens zum Transport von zumindest zwei Kindern, zumindest eines Rehabuggys und/oder zumindest eines Rehawagens.

20. Regenschutz, Sonnenschutz, Markise, Zelt, Unterstand, Abdeckung oder Garage umfassend oder bestehend aus einem Verdeck gemäß einem der Ansprüche 1 bis 14.

21. Verwendung des Verdecks gemäß einem der Ansprüche 1 bis 14 für einen Kinderwagen.

22. Verwendung des Verdecks gemäß einem der Ansprüche 1 bis 14 als Regenschutz, Sonnenschutz, Markise, Zelt, Unterstand, Abdeckung oder Garage oder jeweils als Bestandteil hiervon.
